(19) Europäisches Patentamt
European Patent Office
Office européen des brevets

(11) EP 3 625 299 B1

(12) **FASCICULE DE BREVET EUROPEEN**

(45) Date de publication et mention de la délivrance du brevet:
**18.05.2022 Bulletin 2022/20**

(21) Numéro de dépôt: **18713276.6**

(22) Date de dépôt: **29.03.2018**

(51) Classification Internationale des Brevets (IPC):
***C09D 183/04*** (2006.01) ***C09D 183/06*** (2006.01)
***C08L 83/04*** (2006.01) ***C08L 83/06*** (2006.01)

(52) Classification Coopérative des Brevets (CPC):
(C-Sets disponibles)
**C09D 183/04;** C08G 77/12; C08G 77/20 (Cont.)

(86) Numéro de dépôt international:
**PCT/EP2018/058257**

(87) Numéro de publication internationale:
**WO 2018/178319 (04.10.2018 Gazette 2018/40)**

(54) **COMPOSITION SILICONE RETICULANT PAR POLYADDITION UTILE POUR LE SURMOULAGE DE PIECES**

POLYADDITIONSVERNETZBARE SILIKONZUSAMMENSETZUNG, DIE FÜR UMSPRITZTE TEILE NÜTZLICH IST

POLYADDITION-CROSSLINKABLE SILICONE COMPOSITION USEFUL FOR OVERMOLDING PARTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.03.2017 FR 1700339**

(43) Date de publication de la demande:
**25.03.2020 Bulletin 2020/13**

(73) Titulaire: **ELKEM SILICONES France SAS
69003 Lyon (FR)**

(72) Inventeurs:
- **GHISLAINE, Perez
42320 Cellieu (FR)**
- **DAVID, Mariot
69008 Lyon (FR)**

(74) Mandataire: **Mekki, Boualem
Elkem Silicones France SAS
9, rue Spécia
69190 Saint-Fons (FR)**

(56) Documents cités:
**WO-A1-2008/000771** **WO-A1-2008/055985**
**FR-A1- 2 840 826** **FR-A1- 2 957 604**

EP 3 625 299 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

(52) Classification Coopérative des Brevets (CPC):
(Cont.)

C-Sets
**C09D 183/04**

## Description

### Domaine de l'invention

Le domaine de l'invention concerne l'utilisation de compositions silicones réticulant par polyaddition pour le surmoulage de pièces, notamment en résine thermoplastique, par des procédés d'injection. La technique du surmoulage est mise en œuvre depuis longtemps par injection. Cela consiste à réaliser un surmoulage total ou partiel d'une pièce en résine thermoplastique, métal ou verre avec un élastomère silicone obtenu par réticulation d'une composition silicone dans un outil de moulage par injection.

### Art Antérieur

L'adhésion des élastomères silicones obtenus par réticulation de compositions silicones par polyaddition sur de nombreux substrats tels que les plastiques, les métaux et le verre est faible. Ce manque d'adhésion tend à causer une séparation, spontanée ou en n'exerçant qu'une faible force de traction, entre l'élastomère silicone et le substrat. Or, dans de nombreuses applications une adhésion durable et solide de l'élastomère silicone au substrat est nécessaire.

Différentes solutions techniques ont été développées pour améliorer le niveau d'adhésion entre l'élastomère silicone et le substrat comme le pré-traitement de la surface du substrat ou l'application d'un primaire. Ces méthodes présentent l'inconvénient de rajouter des étapes supplémentaires de procédé.

Un autre moyen d'augmenter l'adhésion entre l'élastomère silicone et le substrat est de modifier la composition silicone réticulant par polyaddition pour obtenir un élastomère silicone ayant une adhésion améliorée sur le substrat. Ces compositions silicones sont communément appelées compositions auto-adhérentes.

Un certain nombre d'additifs favorisant l'adhésion ont été mis en œuvre dans des compositions silicones auto-adhérentes réticulant par polyaddition. Le brevet EP0601881 nous enseigne l'utilisation de composés comprenant par molécule au moins un atome d'hydrogène relié à un atome de silicium (au moins un groupe Si-H) et au moins un autre groupe choisi parmi les groupes alkoxysilyle, glycidyle ou anhydride d'acide pour améliorer l'adhésion entre une résine polypropylène et un élastomère silicone. Le brevet EP0875536 décrit l'utilisation de composés alkoxysilanes ou alkoxysiloxanes avec au moins un groupe époxy comme promoteurs d'adhésion. Le glycidoxypropyltrimethoxysilane est cité comme promoteur d'adhésion préféré. Le brevet EP 1106662 nous enseigne l'utilisation de composés organosiliciés comprenant des groupes époxy et des groupes hydrolysables ainsi que des organohydrogénopolysiloxanes comprenant au moins un noyau aromatique en $C_6$. Plus récemment, le brevet EP1967551 décrit des matériaux composites comprenant des élastomères silicones obtenus à partir de compositions silicones auto-adhérentes comprenant des silicates. WO 2008/000771 A1, FR 2 957 604 A1, WO 2008/055985 A1 et FR 2 840 826 A1 concernent des compositions silicones réticulables susceptibles d'être utilisées pour former un revêtement.

Il existe un besoin constant d'amélioration des performances d'adhésion entre les élastomères silicones obtenus à partir de compositions silicones réticulant par polyaddition et des substrats tels que le verre, les métaux et les résines thermoplastiques tout en maintenant d'excellentes propriétés mécaniques. Il faut également que ces compositions silicones présentent une bonne fluidité pour pouvoir être pompées dans les machines d'injection ou d'extrusion, une bonne stabilité au stockage et une vitesse de réticulation élevée aux températures souhaitées.

### Brève description de l'invention

Ainsi un des objets de l'invention concerne un procédé de préparation d'articles composites **AC** composés d'un substrat rigide **S** en verre, métal ou résine thermoplastique et d'un élastomère silicone **E** avec de bonnes propriétés mécaniques et une bonne adhérence entre le substrat **S** et l'élastomère silicone **E** de telle sorte qu'il existe entre les deux parties une liaison solide.

Un autre objectif de l'invention est de proposer un procédé de préparation d'articles composites **AC** composés d'un substrat **S** en verre, métal ou résine thermoplastique et d'un élastomère silicone **E** où l'élastomère silicone **E** est obtenu à partir d'une composition silicone **C** réticulant par polyaddition, avec une bonne stabilité au stockage avant réticulation et une vitesse de réticulation suffisante aux températures souhaitées pour assurer une cadence industrielle.

L'invention concerne également, des articles composites **AC** composés d'un substrat rigide **S** en verre, métal ou résine thermoplastique et un élastomère silicone **E** avec une bonne adhérence entre le substrat **A** et l'élastomère silicone **E** de telle sorte qu'il existe entre les deux parties une liaison solide.

Un autre objet de l'invention concerne des compositions silicones **C** réticulables par polyaddition en élastomères silicones **E** présentant d'excellentes propriétés mécaniques et avec une bonne adhérence sur le verre, les métaux et les résines thermoplastiques. Ces compositions silicones **C** présentent une bonne fluidité pour être pompés dans des outils de moulage ou d'extrusion et ont une bonne stabilité au stockage.

Ces compositions silicones **C** sont utilisées dans le moulage mais peuvent également être utiles pour le scellement et collage de composants électriques et électroniques.

Les compositions silicones **C** et les articles composites **AC** selon l'invention sont utilisées dans des domaines très diverses comme l'équipement électrique et électronique, l'équipement automobile et médical et nous pouvons les trouver par exemple dans les appareils ménagers, les biens de consommation, les équipements médicaux et les articles de sports et loisirs.

## Description détaillée de l'invention

Selon un premier aspect, l'invention concerne un procédé de préparation d'un article composite **AC** comprenant les étapes suivantes :

a) on applique sur un substrat rigide **S** en métal, verre ou résine thermoplastique une composition silicone **C,** réticulant par polyaddition en un élastomère silicone **E,** comprenant :

(A) au moins un organopolysiloxane **A** comprenant par molécule au moins deux groupes alcényfes, en $C_2$-$C_6$, liés à deux atomes de silicium différents,
(B) au moins une résine organohydrogénopolysiloxane **B**,
(C) au moins un additif **X** qui est un organopolysiloxane linéaire comprenant des motifs siloxyles **(I.1)** à **(I.3)** de formules suivantes:

$$Y_a Z^1_b SiO_{\frac{4-(a+b)}{2}} \quad \textbf{(I.1)}$$

$$Z^2_3 SiO_{\frac{1}{2}} \quad \textbf{(I.2)}$$

$$H_d Z^3_e SiO_{\frac{4-(d+e)}{2}} \quad \textbf{(I.3)}$$

et ne comprenant pas de motifs de formule **(I.4):**

$$Z^2_2 SiO_{\frac{2}{2}} \quad \textbf{(I.4)}$$

dans lesquelles

- a=1 et b=1 ou 2
- d=1 et e=1 ou 2
- le symbole Y représente un radical comprenant un groupe hydrocarboné ayant de 2 à 20 atomes de carbone et une fonction époxy, avec éventuellement un ou plusieurs hétéroatomes tel qu'un atome d'oxygène, de préférence le symbole Y est choisi parmi les radicaux constitués par le groupe : alkylglycidyléther, époxyalkyle linéaire, ramifié ou cyclique, époxyalcényle linéaire, ramifié ou cyclique et glycidyl-ester d'acide carboxylique,
- les symboles $Z^1$, $Z^2$ et $Z^3$ identiques ou différents, représentent, un groupe hydrocarboné monovalent ayant de 1 à 30 atomes de carbone, de préférence choisi parmi le groupe constitué par les groupes alkyles ayant de 1 à 8 atomes de carbone et les groupes aryles ayant de 6 à 12 atomes de carbone, et encore plus préférentiellement choisis parmi le groupe constitué par un groupe méthyle, éthyle et propyle,

avec les conditions suivantes :

- l'additif **X** comprend, par molécule, au moins un motif siloxyle **(I.1)** porteur de groupes hydrocarbonés époxyfonctionnels, au moins trois motifs siloxyles **(I.3)** porteurs de groupes hydrogénosiloxyles et un nombre total de motifs siloxyles **N** compris entre 7 et 30,

(D) au moins une charge renforçante **D,**
(E) au moins un composé organique du titane **M,**
(F) au moins un catalyseur **F** de polyaddition, de préférence un composé d'au moins un métal appartenant au groupe du platine, et
(G) éventuellement un inhibiteur **G,** et
les quantités des différents constituants de ladite composition C sont telles que le rapport molaire [≡SiH] /[ ≡SiAlcényle] est compris entre 1,5 et 3,6 avec

- [≡SiH]= nombre total *de* mole de motifs siloxyles comprenant un atome d'hydrogène lié au silicium, et
- [≡SiAlcényle] = nombre total de mole de motifs siloxyles comprenant un radical alcényle lié au silicium, et

b) on réticule ladite composition silicone **C** par chauffage à une température comprise entre 40 et 250 °C, de préférence entre 100 et 220°C, pour obtenir un article composite **AC** comprenant ledit élastomére silicone E appliqué sur ledit substrat rigide **S.**

Dans la présente invention, on entend par **substrat rigide**, un substrat qui présente de manière inhérente une tenue mécanique, de sorte qu'il ne s'affaisse pas lorsqu'il est disposé verticalement sur sa tranche. Il est différent de ce que l'on appelle communément les substrats souples tels que les textiles, le papier ou les films polymère.

Dans la présente invention, on entend par substrat souple, un substrat qui peut être courbé ou plié par la seule force de l'homme sans se casser ni s'abîmer. Par opposition, dans la présente invention, on entend par substrat rigide un substrat qui ne peut être courbé ou plié par la seule force de l'homme sans se casser ni s'abîmer.

De préférence, le substrat rigide S est choisi parmi le métal et les résines thermoplastiques.

Après de nombreux essais la Demanderesse a pu mettre en évidence que la présence dans la composition silicone **C** de la résine organohydrogénopolysiloxane **B**, de l'additif **X** et du composé organique du titane **M** permet d'obtenir un optimum de propriétés c'est-à-dire :

- une excellente adhésion entre l'élastomère silicone **E,** obtenu par réticulation de la composition silicone **C**, et le substrat rigide **S**
- une bonne vitesse de réticulation de la composition silicone **C** et
- de bonnes propriétés mécaniques pour l'élastomère silicone **E** obtenu par réticulation de la composition silicone **C**

De préférence, les résines thermoplastiques mises en œuvre dans le procédé de l'invention sont des résines constituées d'oléfines polymérisées ou polycondensées et par exemple choisies dans le groupe constitué par : les résines acrylonitrile-butadiene-styrène (ABS), les résines de styrène, les résines de polyethylène, les résines de polypropylène, les résines de polyacétal, les résines acryliques, les résines de polycarbonates (PC), les résines de poly(téréphtalate d'éthylène) (PET), les résines de poly(téréphtalate de butylène) (PBT), les résines de poly(oxide de phénylène), les résines phénoliques, les résines époxy, les résines de Nylon, les résines de polyamide, les résines de polyimide, les résines de polyéthers aromatiques telles que les polyphénylènes éthers (PPO) et les polysulfures de phénylène (PPS) et leurs mélanges.

De façon particulièrement préféré les résines thermoplastiques sont choisies parmi le groupe constitué par : le polyamide 6, le polyamide 6.6, le poly(téréphtalate de butylène) (PBT), les polyphénylènes éthers (PPO), les polysulfures de phénylène (PPS), les polycarbonates (PC), le polyoxyméthylène POM, le polyméthacrylate de méthyle PMMA, le polyétheréthercétone PEEK et le polystyrène PS.

Selon un mode préférentiel de réalisation de l'invention, l'additif **X** comprend par molécule au moins deux motifs siloxyles **(I.1)** porteurs de groupes hydrocarbonés ayant une fonction époxy.

Selon un mode préférentiel de réalisation de l'invention, l'additif **X** est constitué de motifs siloxyles choisis parmi les motifs siloxyle **(I.1)** à **(I.3)** de formules suivantes:

- $$Y_a Z^1_b SiO_{\frac{4-(a+b)}{2}} \quad \textbf{(I.1)}$$

- $$Z^2_3 SiO_{\frac{1}{2}} \quad \textbf{(I.2)}$$

- $$H_dZ^3_eSiO_{\frac{4-(d+e)}{2}} \qquad \textbf{(I.3)}$$

dans lesquelles

- a=1 et b=1 ou 2
- d=1 et e=1 ou 2, et
- les symboles Y, $Z^1$, $Z^2$ et $Z^3$ sont tels que définis ci-dessus.

Selon un autre mode préférentiel, l'additif **X** est constitué de motifs siloxyles choisis parmi les motifs siloxyles **(I.1)** à **(I.3)** de formules suivantes:

- $$Y_aZ^1_bSiO_{\frac{4-(a+b)}{2}} \qquad \textbf{(I.1)}$$
- $$Z^2_3SiO_{\frac{1}{2}} \qquad \textbf{(I.2)}$$
- $$H_dZ^3_eSiO_{\frac{4-(d+e)}{2}} \qquad \textbf{(I.3)}$$

dans lesquelles

- a=1 et b=1 ou 2,
- d=1 et e=1, et
- les symboles Y, $Z^1$, $Z^2$ et $Z^3$ sont tels que définis ci-dessus.

Selon un mode de réalisation préféré, l'additif **X** a un nombre **N1** de motifs siloxyles **(I.1)** et un nombre **N3** de motifs siloxyles **(I.3)** qui répondent aux conditions suivantes :

- $2 \leq$ **N1** $\leq 10$ et de *préférence* $3 \leq$ **N1** $\leq 7$, et
- $3 \leq$ **N3** $\leq 20$ et de préférence $5 \leq$ **N3** $\leq 20$.

Il est particulièrement avantageux d'utiliser un additif **X** qui a un nombre total **N** de motifs siloxyles compris entre 7 et 25 bornes incluses et encore plus préférentiellement entre 7 et 15.

De préférence, l'additif **X** a une viscosité dynamique à 25°C comprise entre 10 et 300 mPa.s et de préférence entre 15 et 100 mPa.s.

Toutes les viscosités dont il est question dans le présent exposé correspondent à une grandeur de viscosité dynamique à 25°C dite "Newtonienne", c'est-à-dire la viscosité dynamique qui est mesurée, de manière connue en soi, avec un viscosimètre Brookfield à un gradient de vitesse de cisaillement suffisamment faible pour que la viscosité mesurée soit indépendante du gradient de vitesse.

De préférence, l'additif **X** a une teneur en motifs siloxyles **(I.1)** comprise entre 0,020 et 0,45 mol pour 100 g d'additif **X.** Selon un autre mode de réalisation, l'additif **X** a une teneur en motifs siloxyles **(I.1)** comprise entre 0,15 et 0,45 mol pour 100 g d'additif **X.**

De préférence, l'additif **X** a une teneur en motifs siloxyles **(I.3)** supérieure ou égale à 0,3 mol pour 100 g d'additif **X.** Selon un autre mode de réalisation, l'additif **X** a une teneur en siloxyles **(I.3)** comprise entre 0,3 et 0,85 mol pour 100g d'additif **X.**

Selon un mode particulier de réalisation, l'additif **X** a une teneur en motifs siloxyles **(I.1)** comprise entre 0,15 et 0,45 mol pour 100g d'additif **X** et une teneur en sifoxyles **(I.3)** comprise entre 0,3 et 0,85 mol pour 100g d'additif **X.**

De préférence, pour le motif siloxyle **(I.1)** Y est choisi parmi le groupe constitué par les groupements **(R-1)** à **(R-6)** de formules suivantes :

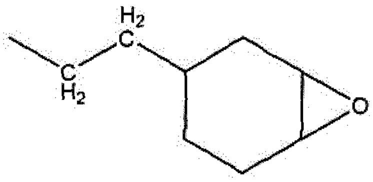

**(R-1)**

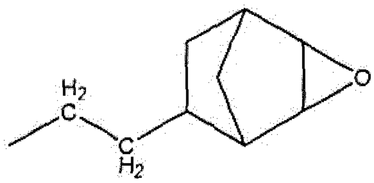

**(R-2)**

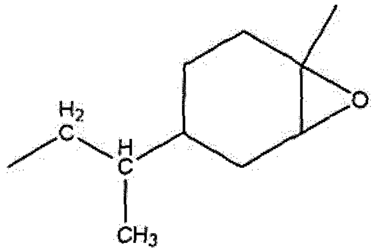

**(R-3)**

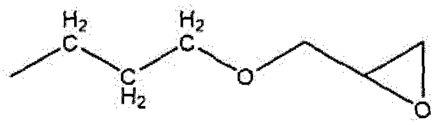

**(R-4)**

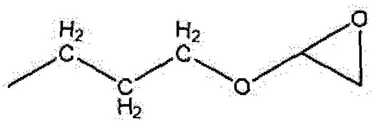

**(R-5)**

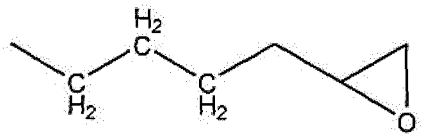

**(R-6)**

Selon un mode de réalisation particulièrement préféré, pour le motif siloxyle **(I.1)** Y est le groupement **(R-4)** de formule suivante :

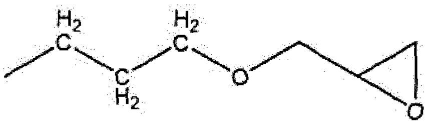

**(R-4)**

Sur le plan quantitatif, il est avantageux que la concentration en fonction époxy dans la composition silicone **C** soit comprise entre 0,20 et 5 mmol par 100 g de composition **C.** Préférentiellement la concentration en fonction époxy dans la composition **C** est comprise entre 0,25 et 5 mmol par 100g de composition **C** et encore plus préférentiellement entre 0,6 et 5 mmol par 100g de composition **C.** Lorsque la concentration en fonction époxy est supérieure à 5 mmol par 100 g de composition **C,** on constate une augmentation de la viscosité de la composition **C,** une dégradation de la qualité du mélange de l'ensemble des constituants et une diminution de la vitesse de réticulation de la composition silicone **C.**

Selon un mode de réalisation préféré de l'invention la composition silicone **C** ne comprend pas de composé isocyanurate.

Selon un mode de réalisation particulier, les quantités des différents constituants de la composition **C** sont telles que le rapport molaire [≡SiH]/[≡SiAlcényle] est compris entre 1,7 et 3,3 avec :

- [≡SiH]= nombre total de mole de motifs siloxyles comprenant un atome d'hydrogène liés au silicium, et
- [≡SiAlcényle] = nombre total de mole de motifs siloxyles comprenant un radical alcényle liés au silicium.

Lorsque le rapport molaire [≡SiH]/[≡SiAlcényle] est inférieur à 1,5 , l'élastomère obtenu après réticulation de la composition silicone ne présente pas de propriétés mécaniques suffisantes, notamment la dureté obtenue est trop faible. Lorsque le rapport molaire [≡SiH]/[≡SiAlcényle] est supérieur à 3,6 des phénomènes de bulles apparaissent lors du mélange des constituants ce qui dégrade la processabilité du mélange et rend difficile la mise en œuvre du procédé selon l'invention.

Le composé organique du titane **M** est de préférence un chélate de titane ou un alcoxyde métallique de formule $Ti(OR)_4$ où R est choisi parmi les groupes alkyles linéaires ou ramifiés en $C_1$-$C_8$, les groupes alkoxyalkyl ou les groupes acyles.

Encore plus préférentiellement, le composé organique du titane **M** est choisi parmi les alkylates de titane comme le titanate de butyle, le titanate d'isopropyle, le titanate de méthyle et le titanate d'octyle. Plus préférentiellement encore, le composé organique du titane **M** est le titanate de butyle.

La teneur en composé organique du titane **M** dans la composition silicone **A** selon l'invention est comprise entre 0,005 et 0,35 parties en poids pour 100 parties en poids de la composition **C,** de préférence entre 0,03 et 0,25 parties en poids pour 100 parties en poids de la composition **C.** Des teneurs supérieures à 0,35 parties en poids de la composition **C** conduisent à un jaunissement important de l'élastomère silicone **E** et à un ralentissement de la vitesse de réticulation de la composition silicone **C.**

Dans tout le présent document, on se référera à des éléments de nomenclature classique pour désigner les motifs siloxyle M, D, T, Q des organopolysiloxanes qui selon la dénomination largement connue dans la chimie des silicones représentent :

- M = motif siloxyle de formule $R_3SiO_{1/2}$
- D = motif siloxyle de formule $R_2SiO_{2/2}$
- T = motif siloxyle de formule $RSiO_{3/2}$ et
- Q = motif siloxyle de formule $SiO_{4/2}$ ,

où les radicaux R, identiques ou différents, sont des groupements monovalents.

Selon un mode de réalisation du procédé selon l'invention, l'application de la composition silicone **C** sur le substrat rigide **S** peut se faire par coulée, à la brosse, à la racle, par immersion ou par extrusion.

Dans le procédé selon l'invention, la composition silicone **C** est appliquée de façon continue ou discontinue, sur une partie ou la totalité du substrat rigide **S.** Ainsi la surface du substrat rigide **S** est recouverte totalement ou en partie de la composition silicone **C.**

Après réticulation de la composition **C** à l'étape b) du procédé selon l'invention le substrat rigide **S** est recouvert totalement ou en partie par l'élastomère silicone **E.**

Selon un mode de réalisation préféré, le procédé selon l'invention est mis en œuvre dans un appareil de moulage par injection. Il s'agit alors d'un procédé de surmoulage où l'on réalise un moulage en élastomère silicone **E** sur une partie ou la totalité du substrat rigide **S.** Différents types de procédés de surmoulage peuvent être mis en œuvre : le surmoulage d'insert ou le surmoulage avec un moule rotatif.

Dans le cas du surmoulage d'insert, le substrat rigide **S** en verre, métal ou résine thermoplastique est introduit dans le moule de l'appareil de moulage par injection où est la composition silicone C qui réticule sous l'effet de la chaleur pour obtenir l'élastomère silicone **E.** Le substrat rigide **S** a pu être obtenu au préalable par moulage de résine thermoplastique dans le même ou un autre appareil de moulage par injection.

Dans le cas du surmoulage avec moule rotatif, le procédé est mis en œuvre dans une machine de moulage avec deux unités d'injection qui utilise un moule rotatif comprenant une plaque pouvant être mise en mouvement de rotation et contenant la ou les parties empreintes, sur la partie mobile de l'outillage. Sur cette plaque tournante (hydraulique ou électrique) est fixée une moitié du moule. Après l'injection du matériau thermoplastique avec l'unité d'injection principale pour obtenir le substrat rigide **S** en résine thermoplastique, la plaque porte empreinte effectue une rotation permettant de positionner l'insert à surmouler (ici le substrat rigide S en résine thermoplastique) au niveau de l'injection de l'élastomère silicone. La composition silicone **C** est ensuite injectée et réticulée sous l'effet de la chaleur pour obtenir un article composite **AC** intégralement moulé.

Toutes les machines ou appareils automatiques de moulage par injection automatique peuvent être utilisées pour mettre en œuvre le procédé selon l'invention. La sélection technique de la machine de moulage par injection est déterminée par la viscosité de la composition silicone et les dimensions des pièces moulées. La composition silicone **C** est obtenue par mélange de l'ensemble des composants avant son injection dans le moule. Le moule le contenant n'a pas besoin d'être revêtu ou traité avec des composés de séparation de *moule* afin de *maintenir* l'adhérence sur la surface de l'outil suffisamment basse pour la libération du moule.

Selon un mode de réalisation de l'invention, l'organopolysiloxane **A** comprend :

(i) au moins deux motifs siloxyles **(I.5)** de formule suivante

$$W_a Z_b SiO_{\frac{4-(a+b)}{2}} \quad \textbf{(I.5)}$$

dans laquelle :

- a= 1 ou 2, b= 0, 1 ou 2 et a+b= 1, 2 ou 3;
- W représente indépendamment un groupe alcényle, de préférence ayant de 2 à 6 atomes de carbone et, plus préférentiellement encore un groupe vinyle ou allyle, et
- Z représente indépendamment un groupe hydrocarboné monovalent ayant de 1 à 30 atomes de carbone et de préférence choisi parmi le groupe constitué par les groupes alkyles ayant de 1 à 8 atomes de carbone inclus, et encore plus préférentiellement choisi parmi le groupe constitué par un radical méthyle, éthyle, propyle et 3,3,3-trifluoropropyle

(ii) et éventuellement d'autres motifs siloxyles **(I.6)** de formule suivante

$$Z_cSiO_{(4-c)/2} \quad \textbf{((I.6)}$$

dans laquelle :

- Z a la même signification que ci-dessus, et
- c représente un nombre entier valant 0, 1, 2 ou 3.

Selon un mode de réalisation préféré, dans la formule **(I.5)**, a=1 et a+b=2 ou 3 et dans la formule **(I.6)** c=2 ou 3. Il est entendu dans les formules **(I.5)** et **(I.6)** ci-dessus que, si plusieurs radicaux W et Z sont présents, ils peuvent être identiques ou différents les uns des autres.

L'organopolysiloxane **A** présente de préférence une structure linéaire, éventuellement cyclique. Ces organopolysiloxanes linéaires ont une viscosité dynamique à 25°C comprise entre 100 mPa.s et 120000 mPa.s et plus préférentiellement entre 10000 mPa.s et 120000 mPa.s.

Lorsqu'il s'agit d'organopolysiloxanes linéaires, ceux-ci peuvent être choisis parmi le groupe constitué par :

- les polydiméthylsiloxanes à extrémités diméthylvinylsilyles ;
- les poly(vinylméthylsiloxane-co-diméthylsiloxane) à extrémités diméthylvinylsilyles ;
- les poly(diméthylsiloxane-co-vinylméthylsiloxane) à extrémités triméthylsilyles ;
- les polyméthylvinylsiloxanes cycliques.

Selon un mode de réalisation de l'invention, la résine organohydrogénopolysiloxane **B** est un organohydrogénopolysiloxane branché comprend des motifs siloxyle de formules **(I.7)** et **(I.8)** suivants:

$$H_aZ^1_bSiO_{\frac{4-(a+b)}{2}} \qquad \textbf{(I.7)}$$

$$Z^1_cSiO_{\frac{4-c}{2}} \qquad \textbf{(I.8)}$$

dans lesquelles :

- a= 1 ou 2, b= 0, 1 ou 2 et a+b= 1, 2 ou 3;
- c= 0, 1, 2 ou 3, avec au moins un motif **(I.8)** où c=0 ou 1 ;

- $Z^1$ représente, indépendamment un groupe hydrocarboné monovalent ayant de 1 à 30 atomes de carbone et de préférence choisi parmi le groupe constitué par les groupes alkyles ayant de 1 à 8 atomes de carbone, et encore plus préférentiellement choisi parmi le groupe constitué par un radical méthyle, éthyle, méthyle, éthyle, propyle et 3,3,3-trifluoropropyle.

Dans un mode préféré de réalisation de l'invention, la résine organohydrogénopolysiloxane **B** comprend au moins trois atomes d'hydrogène liés chacun à des atomes de silicium différents. Cette résine **B** est choisie parmi le groupe constitué par les résines silicones suivantes :

- M'Q où les atomes d'hydrogène liés à des atomes de silicium sont portés par les groupes M,
- MM'Q où les atomes d'hydrogène fiés à des atomes de silicium sont portés par une partie des motifs M,
- MD'Q où les atomes d'hydrogène liés à des atomes de silicium sont portés par les groupes D,
- MDD'Q où les atomes d'hydrogène liés à des atomes de silicium sont portés par une partie des groupes D,
- MM'TQ où les groupes vinyles sont inclus dans une partie des motifs M,
- MM'DD'Q où les groupes vinyles sont inclus dans une partie des motifs M et D,
- et leurs mélanges,

avec :

- M, D, T et Q tels que définis précédemment
- M'= motif siloxyle de formule $R_2HSiO_{1/2}$
- D'= motif siloxyle de formule $RHSiO_{2/2}$.

et les groupements R, identiques ou différents, sont des groupes hydrocarbonés monovalents choisis parmi les groupes alkyles ayant de 1 à 8 atomes de carbone inclus tels que les groupes méthyle, éthyle, propyle et 3,3,3-trifluoropropyle. De préférence, les groupements R sont des méthyles.

De préférence la résine organohydrogénopolysiloxane **B** est une résine M'Q ou MD'Q telles que décrites ci-dessus. Encore plus préférentiellement, la résine organohydrogénopolysiloxane **B** est une résine M'Q.

Avantageusement, la résine organohydrogénopolysiloxane **B** contient entre 2 et 40% en poids de groupe Si-H, de préférence entre 10 et 35% en poids en poids de groupes Si-H et encore plus préférentiellement entre 15 et 30% en poids de groupes Si-H.

Selon un mode de réalisation de l'invention, la résine organohydrogénopolysiloxane **B** est présente dans la composition **C** entre 0,1 et 2,5 parties en poids, plus préférentiellement entre 0,3 et 2,2 parties en poids pour 100 parties en poids de composition **C.**

L'absence de résine organohydrogénopolysiloxane **B** branché dans la composition **C** conduit à une perte d'adhésion entre l'élastomère silicone **E** obtenu par réticulation de la composition silicone **C** et le substrat rigide **S**. Une quantité trop importante de résine organohydrogénopolysiloxane **B** augmente la teneur en groupe Si-H de la composition **C** et ne permet pas de maintenir le ratio molaire [≡SiH]/[ ≡SiAlcényle] préféré tel que décrit précédemment optimisé pour l'application.

Selon un autre mode de réalisation du procédé selon l'invention, la composition **C** peut également comprendre un organohydrogénopolysiloxane linéaire **H** comportant des motifs siloxyle de formules **(I.9)** et éventuellement **(I.10)** suivants :

$$H_a L^1_b SiO_{\frac{4-(a+b)}{2}} \qquad \textbf{(I.9)}$$

$$Z^1_c SiO_{\frac{4-c}{2}} \qquad \textbf{(I.10)}$$

dans laquelle :

- a= 1 ou 2, b= 0, 1 ou 2 et a+b= 2 ou 3;
  - H représente un atome d'hydrogène,
  - $L^1$ représente, indépendamment, un groupe hydrocarboné monovalent ayant de 1 à 30 atomes de carbone et de préférence choisi parmi le groupe constitué par les groupes alkyles ayant de 1 à 8 atomes de carbone inclus et encore plus préférentiellement choisi parmi le groupe constitué par un radical méthyle, éthyle, propyle et 3,3,3-trifluoropropyle, et
- c= 2 ou 3,
  - $Z^1$ représente, indépendamment un groupe hydrocarboné monovalent ayant de 1 à 30 atomes de carbone et de préférence choisi parmi le groupe constitué par les groupes alkyles ayant de 1 à 8 atomes de carbone inclus et encore plus préférentiellement choisi parmi le groupe constitué par un radical méthyle, éthyle, propyle et

3,3,3-trifluoropropyle.

La viscosité dynamique de l'organohydrogénopolysiloxane linéaire **H** est supérieure ou égale à 5, de préférence supérieur ou égale à 10 et, plus préférentiellement encore, est comprise entre 20 et 1000 mPa.s.

L'organohydrogénopolysiloxane linéaire **H** peut présenter une structure linéaire, éventuellement cyclique. Le degré de polymérisation est supérieur ou égal à 2. Plus généralement, il est inférieur à 5 000.

Des exemples de motifs hydrogénosiloxyles de formule **(I.7)** sont des motifs M' et D' tels que décrits précédemment où R représente un groupe méthyle.

Des exemples d'huile silicone réticulante **H** sont :

- $M_2'D_xD_y'$ : les diméthylpolysiloxanes à extrémités hydrogénodiméthylsilyle, poly(diméthylsiloxane) (méthylhydrogénosiloxy) $\alpha,\omega$-diméthylhydrogéno-siloxane,
- $M_2D_xD_y'$ : les copolymères à motifs diméthyl-hydrogénométhylpolysiloxanes (diméthyl) à extrémités triméthylsilyle,
- $M_2'D_xD_y'$ : les copolymères à motifs diméthyl-hydrogénométhylpolysiloxanes à extrémités hydrogénodiméthylsilyle,
- $M_2D_x'$ : les hydrogénométhylpolysiloxanes à extrémités triméthylsilyle,
- $M_zM'_tD_xD_y'$: les copolymères à motifs diméthyl-hydrogénométhylpolysiloxanes (diméthyl) à extrémités triméthylsilyle et les copolymères à motifs diméthyl-hydrogénométhylpolysfloxanes (diméthyl) à extrémités triméthylsilyle,
- $D'_4$ : les hydrogénométhylpolysiloxanes cycliques,

avec x, y, z et t étant des nombres entiers ou décimaux et z+t=2.

Selon un mode préféré de réalisation de l'invention, la charge renforçante **D** est choisie parmi les matières minérales, en particulier siliceuses. Les charges siliceuses renforçantes sont choisies parmi les silices colloïdales, les poudres de silice de combustion et de précipitation ou leurs mélanges. Ces poudres de silice présentent une dimension moyenne des particules inférieure à 0,1 $\mu$m et une surface spécifique, mesurée selon la méthode BET, d'au moins 20 $m^2/g$, de préférence supérieure à 50 $m^2/g$ et encore plus préférentiellement comprise entre 100 et 400 $m^2/g$.

Ces silices peuvent être incorporées telles quelles ou après avoir été traitées par des composés organosiliciés pour les rendre hydrophobes. Parmi ces composés, figurent les méthylpolysiloxanes tels que l'hexaméthyldisiloxane, l'octaméthylcyclotétrasiloxane, des méthylpolysilazanes tels que l'hexaméthyldisilazane, l'hexaméthylcyclotrisilazane, des chlorosilanes tels que le diméthyldichlorosilane, le triméthylchlorosilane, le méthylvinyldichlorosilane, le diméthylvinylchlorosilane, des alcoxysilanes tels que le diméthyldiméthoxysilane, le diméthylvinyléthoxysilane, le triméthylméthoxysilane. Lors de ce traitement, les silices peuvent accroître leur poids de départ jusqu'à un taux de 20 %, de préférence de 10 % environ.

Avantageusement, la charge renforçante **D** est une silice pyrogénée ayant une surface spécifique mesurée selon la méthode BET comprise entre 100 et 400 $m^2/g$. Encore plus avantageusement, la charge renforçante **D** est une silice pyrogénée ayant une surface spécifique mesurée selon la méthode BET comprise entre 100 et 400 $m^2/g$ et ayant été traitée par des composés organosiliciés.

Selon un mode particulier de réalisation de l'invention, la composition silicone **C** comprend de 20 à 50 parties en poids de charge renforçante **D,** plus préférentiellement de 20 à 40 parties de charge renforçante **D** pour 100 parties en poids de composition silicone **C.**

Les catalyseurs **F** de polyaddition sont bien connus. On utilise, de préférence, les composés du platine et du rhodium. On peut, en particulier, utiliser les complexes du platine et d'un produit organique décrit dans les brevets US-A-3 159 601, US-A-3 159 602, US-A-3 220 972 et les brevets européens EP-A-0 057 459, EP-A-0 188 978 et EP-A-0 190 530, les complexes du platine et d'organosiloxanes vinylés décrits dans les brevets US-A-3 419 593, US-A-3 715 334, US-A-3 377 432 et US-A-3 814 730. Le catalyseur **F** généralement préféré est le platine. Dans ce cas, la quantité pondérale de catalyseur **F,** calculée en poids de platine-métal, est généralement comprise entre 2 et 400 ppm, de préférence entre 5 et 200 ppm basée sur le poids total de la composition **C.** Avantageusement la teneur en métal platine de la composition **C** est comprise entre 10 et 120 ppm, préférentiellement entre 10 et 95 ppm, plus préférentiellement entre 10 et 70 ppm et encore plus préférentiellement entre 10 et 60 ppm massiques basé sur le poids total de la composition **C.**

L'inhibiteur de réticulation **G** (ou ralentisseur de la réaction d'addition) peut, quant à lui, être choisi parmi les composés suivants :

- un organopolysiloxane, avantageusement cyclique, et substitué par au moins un alcényle, le tétraméthylvinyltétrasiloxane étant particulièrement préféré,
- la pyridine,
- les phosphines et les phosphites organiques,
- les amides insaturés,
- les maléates alkylés

- et les alcools acétyléniques.

Ces alcools acétyléniques, (cf. FR-B-1 528 464 et FR-A-2 372 874), qui font partie des bloqueurs thermiques de réaction d'hydrosilylation préférés, ont pour formule :

$$(R_1)(R_2)C(OH)\text{-}C{\equiv}CH$$

formule dans laquelle :

- $R_1$ est un radical alkyle linéaire ou ramifié, ou un radical phényle ;
- $R_2$ est un atome d'hydrogène, un radical alkyle linéaire ou ramifié, ou un radical phényle ;
- les radicaux $R_1$, $R_2$ et l'atome de carbone situé en alpha de la triple liaison pouvant éventuellement former un cycle ; et
- le nombre total d'atomes de carbone contenus dans $R_1$ et $R_2$ étant d'au moins 5, de préférence de 9 à 20.

Lesdits alcools sont, de préférence, choisis parmi ceux présentant un point d'ébullition supérieur à 250°C. On peut citer à titre d'exemples, les produits suivants qui sont disponibles commercialement:

- i'éthynyl-1-cydohexanol 1 ;
- le méthyl-3 dodécyne-1 ol-3 ;
- le triméthyl-3,7,11 dodécyne-1 ol-3 ;
- le diphényl-1,1 propyne-2 ol-1 ;
- l'éthyl-3 éthyl-6 nonyne-1 ol-3 ;
- le méthyl-3 pentadécyne-1 ol-3.

Un tel inhibiteur de réticulation est présent à raison de 3 000 ppm au maximum, de préférence à raison de 100 à 2000 ppm par rapport au poids total de la composition **C.**

Selon un autre de ses aspects, l'invention concerne un article composite **AC** comprenant un substrat rigide **S** en verre, métal ou résine thermoplastique et un élastomère silicone **E** obtenu par réticulation d'une composition silicone **C** telle que définie ci-dessus.

Le substrat rigide **S** est de préférence un objet *moulé* en résine thermoplastique.

Selon un mode de réalisation de l'invention, l'article composite **AC** est obtenu par moulage de la composition silicone **C** dans un *outil* de *moulage* par injection. Dans ce cas l'article composite **AC** est un article moulé composite.

Selon un mode de réalisation particulièrement préféré l'article composite **AC** est intégralement moulé. C'est le cas lorsque le substrat **S** est moulé en résine thermoplastique et l'élastomère silicone **E** a également été obtenu par moulage. De préférence, l'article composite **AC** intégralement moulé est réalisé avec un ou plusieurs outils de moulage par injection.

Un autre objet de l'invention concerne la composition silicone **C** réticulant par polyaddition comprenant :

(A) au moins un organopolysiloxane **A** comprenant par molécule au moins deux groupes alcényles, en $C_2$-$C_6$, liés à deux atomes de silicium différents,
(B) au moins une résine organohydrogénopolysiloxane **B**,
(C) au moins un additif **X** qui est un organopolysiloxane linéaire comprenant des motifs siloxyles **(I.1)** à **(I.3)** de formules suivantes:

- $$Y_a Z^1_b SiO_{\frac{4-(a+b)}{2}} \qquad \textbf{(I.1)}$$

- $$Z^2_3 SiO_{\frac{1}{2}} \qquad \textbf{(I.2)}$$

- $$H_d Z^3_e SiO_{\frac{4-(d+e)}{2}} \qquad \textbf{(I.3)}$$

et ne comprenant pas de motifs de formule **(I.4)**:

- $$Z_2^2SiO_{\frac{2}{2}} \quad (I.4)$$

dans lesquelles

- a=1 et b=1 ou 2
- d=1 et e=1 ou 2
- le symbole Y représente un radical comprenant un groupe hydrocarboné ayant de 2 à 20 atomes de carbone et une fonction époxy, avec éventuellement un ou plusieurs hétéroatomes tel qu'un atome d'oxygène, de préférence le symbole Y est choisi parmi Ses radicaux constitués par le groupe : alkylglycidyléther, époxyalkyle linéaire, ramifié ou cyclique, époxyalcényle linéaire, ramifié ou cyclique et glycidyl-ester d'acide carboxylique,
- les symboles $Z^1$, $Z^2$ et $Z^3$ identiques ou différents, représentent, un groupe hydrocarboné monovalent ayant de 1 à 30 atomes de carbone, de préférence choisi parmi le groupe constitué par les groupes alkyles ayant de 1 à 8 atomes de carbone et les groupes aryles ayant de 6 à 12 atomes de carbone, et encore plus préférentiellement choisis parmi le groupe constitué par un groupe méthyle, éthyle et propyle,

avec les conditions suivantes :

- l'additif **X** comprend, par molécule, au moins un motif siloxyle **(I.1)** porteur de groupes hydrocarbonés époxyfonctionnels, au moins trois motifs siloxyles **(I.3)** porteurs de groupes hydrogénosifoxyles et un nombre total de motifs siloxyles **N** compris entre 7 et 30,

(D) au moins une charge renforçante **D,**
(E) au moins un composé organique du titane **M,**
(F) au moins un catalyseur **F** de polyaddition, de préférence un composé d'au moins un métal appartenant au groupe du platine, et
(G) éventuellement un inhibiteur **G,** et
les quantités des différents constituants de ladite composition **C** sont telles que le rapport molaire (≡SiH] /[ ≡SiAlcényle] est compris entre 1,5 et 3,6 *avec*

- [≡SiH]= nombre total de mole de motifs siloxyles comprenant un atome d'hydrogène lié au silicium, et
- [≡SiAlcényle] = nombre total de mole de motifs siloxyles comprenant un radical alcényle lié au silicium.

Les différents constituants **A**, **B**, **X**, **D**, **M**, **F** et **G** de la composition **C** et leurs concentrations dans la composition silicone C sont tels que décrits ci-dessus.

Selon un autre mode de réalisation de l'invention la composition silicone **C** peut comprendre également un organohydrogénopolysiloxane linéaire **H** tel que défini ci-dessus.

Avantageusement, la composition silicone **C** comprend pour 100 parties en poids de composition **C** :

- de 0,1 à 2,5 de parties en poids de résine organohydrogénopolysiloxane **B**
- de 0,4 à 2 parties en poids d'additif **X** et
- de 0,005 à 0,35 parties en poids de composé organique **M** de titane.

Encore plus préférentiellement la composition silicone **C** comprend pour 100 parties en poids de composition **C** :

- de 0,3 à 2,2 de parties en poids de résine organohydrogénopolysiloxane **B**
- de 0,4 à 2 parties en poids d'additif **X** et
- de 0,03 à 0,25 parties en poids de composé organique **M** de titane.

Selon un autre mode préférentiel de réalisation de l'invention la composition silicone C comprend pour 100 parties en poids de composition **C:**

- de 55 à 80 parties en poids d'organopolysiloxane **A**
- de 0,3 à 2,2 de parties en poids de résine organohydrogénopolysiloxane **B**
- de 0,4 à 2 parties en poids d'additif **X** et

- de 0,03 à 0,25 parties en poids de composé organique **M** de titane
- de 20 à 40 parties en poids de charge renforçante **D**
- de 0,002 à 0,01 parties en poids de Platine et
- de 0 à 0,1 parties d'inhibiteur **G.**

Selon un autre mode préférentiel de réalisation de l'invention la composition silicone **C** est constituée pour 100 parties en poids de composition **C** de :

- de 55 à 80 parties en poids d'organopolysiloxane **A**
- de 0,3 à 2,2 de parties en poids de résine organohydrogénopolysiloxane **B**
- de 0,4 à 2 parties en poids d'additif **X** et
- de 0,03 à 0,25 parties en poids de composé organique **M** de titane
- de 20 à 40 parties en poids de charge renforçante **D**
- de 0,002 à 0,01 parties en poids de Platine,
- de 0 à 0,1 parties d'inhibiteur **G** et
- de 0 à 3 parties en poids d'organohydrogénopolysi/oxane linéaire **H.**

La préparation de la composition silicone C selon l'invention, consiste simplement à mélanger les différents constituants **A**, **B**, **X**, **D**, **M**, **F** et éventuellement **G,** et **H** à l'aide de moyens et de méthodologies de mélange connus de l'homme de l'art. Le mélange est de préférence réalisé avec des mélangeurs appropriés pour des compositions avec une viscosité élevée, par exemple des malaxeurs ou des mélangeurs planétaires sous atmosphères de gaz inerte.
Dans un mode de réalisation préféré, les charges renforçantes D sont traitées in situ avec l'agent d'hydrophobisation, de préférence l'hexaméthyldisiazane et/ou le divinyl tétraméthyldisilazane en présence d'une partie du composé A et de l'eau, à une température comprise entre températures de 60 à 80 °C pendant au moins 30 minutes dans un système de mélange approprié pour des matériaux à haute viscosité, par exemple un malaxeur ou un mélangeur planétaire. Ensuite, on réalise une étape d'évaporation sous pression normale puis sous vide pour séparer l'excès d'agent hydrophobant et de l'eau. Les autres composants sont ensuite mélangés efficacement dans le même appareillage en 10 à 30 minutes. Le catalyseur de polyaddition F est de préférence ajouté en dernier.
Il est possible de réaliser des mélanges partiels car les composés **B**, **X** et **H** doivent être de préférence stockés séparément du catalyseur **F**.
Ainsi, selon un autre de ses aspects, la présente invention est relative à un système bicomposant précurseur de la composition **C** selon l'invention et telle que décrite ci-dessus se présentant en deux parties **C1** et **C2** distinctes destinées à être mélangées pour former la composition **C**, caractérisé en ce que l'une de ces parties contient le catalyseur **F** tandis que l'autre partie contient l'additif **X**, la résine **B** et l'organohydrogénopolysiloxane **H** lorsqu'il est présent.
L'invention concerne également l'élastomère silicone **E** obtenu par réticulation et/ou durcissement de la composition silicone C selon l'invention et telle que décrite ci-dessus.
Un dernier objet de l'invention concerne l'utilisation d'une composition **C** telle que décrite ci-dessus dans un moulage par injectior.
Les exemples suivants sont donnés à titre indicatif et ne peuvent être considérés comme une limite du domaine et de l'esprit de l'invention.

**EXEMPLES**

1) Définition des constituants :

- **Composition Base** : Un malaxeur est chargé avec 67 parties d'un mélange de deux huiles polydiméthylsiloxanes bloquées à chacune des extrémités des chaînes par un motif $(CH_3)2ViSiO_{1/2}$, ayant une viscosité de 60000 mPa.s et 100000 mPa.s, 26 parties de silice pyrogénee ayant une surface spécifique mesurée par la méthode BET de 300 $m^2/g$ et de 7 parties d'hexamethyldisilazane. L'ensemble est chauffé à 70°C sous agitation pendant 1 heure puis devolatilisé, refroidi et stocké.
- **Résine Si-H** : organopolysiloxane de formule $M'_4Q$ contenant 24% en poids de groupes Si-H
- **Huile Si-H** : organopolysiloxane linéaire comprenant des motifs hydrogénosilyles dans la chaîne et en bout de chaîne et contenant environ 20% en poids de groupes Si-H
- **HVI1** : Huile vinylée de viscosité 1000 mPa.s comprenant des motifs vinylés uniquement dans la chaîne.
- **HVI2** : Huile vinylée de viscosité 350 mPa.s comprenant des motifs vinylés dans la chaîne et en bout de chaîne.
- Catalyseur **C1** : platine métal, introduit sous la forme d'un complexe organométallique à 10 % en poids de platine

métal, connu sous le nom de catalyseur de Karstedt dilué dans **HVI1.**

- Inhibiteur : éthynyl-1-cyclohexanol-1 ou ECH,
- Titanate de butyle: $Ti(OBu)_4$ ou **TBOT**
- Différents promoteurs adhésion comprenant des motifs époxy ont été synthétisés

(voir ci-dessus)

- Le vinyltriméthoxysilane **VTMO** a également été testé comme promoteur d'adhésion.

Préparation des promoteurs d'adhésion

2 additifs X1 et X2 ont été synthétisés constitués de:

- n motifs $YCH_3SiO_{2/2}$
- m motifs $HCH_3SiO_{2/2}$
- 2 motifs $(CH_3)_3Si_{1/2}$

où Y est le groupement époxy de formule suivante

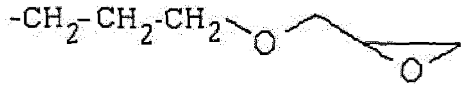

**Y**

**Additif X1**

Dans un réacteur de 10L sous azote, on introduit 1733,9 g de toluène et 2,7 g de d'un complexe de platine carbène, commercialisé par Umicore sous le nom commercial Umicore HS432®. Ce mélange est placé sous agitation et chauffé à 77°C. Un mélange d'allyl glycidyl ether (AGE) (390,5 g, 3,42 mol) et d'un polyméthylhydrogénosiloxane comprenant 20 motifs $(CH_3)HSiO_{2/2}$ et deux motifs terminaux $(CH_3)_3SiO_{1/2}$ (5599,5 g, SiH = 82,23 mol) est ajouté à l'aide d'une pompe pendant 54 min. Lorsque l'ajout est terminé, le chauffage est maintenu pendant 1 heure. Puis le chauffage est arrêté et après retour à température ambiante, le milieu réactionnel est dévolatilisé à 40°C sous 5 mbar pendant 1 heure puis montée progressive de la température jusqu'à 85°C pendant 4h. La température est maintenue à 85°C pendant 1h pour conduire à une huile silicone fonctionnalisée (7727,8g) composée de n motifs $YCH_3SiO_{2/2}$, m motifs $HCH_3SiO_{2/2}$ et deux motifs $(CH_3)_3Si_{1/2}$ avec les caractéristiques suivantes : n+m = 20, [SiH] = 1,30 mol/100g ; [Epoxy] = 37,7 mmol/100g ; Viscosité = 12,3 mPa.s.

**Additif X2**

Dans un réacteur de 1 L sous azote, on introduit 181,0 g de toluène. Le milieu est placé sous agitation et chauffé à 85°C. Lorsque la température est atteinte, 10,2 mg d'un complexe de platine carbène, commercialisé par Umicore sous le nom commercial Umicore HS432® est introduit. Puis, un mélange d'allyl *glycidyl ether* (AGE) (236,8 g, 2,07 mol) et d'un polyméthylhydrogénosiloxane avec 9 motifs $(CH_3)HSiO_{2/2}$ et deux motifs terminaux $(CH_3)_3SiO_{1/2}$ (363,2 g, SiH = 4,77 mol) est ajouté goutte à goutte pendant 4 heures. Après retour à température ambiante, le milieu réactionnel est dévolatilisé à 25-30°C sous 0-3 mbar pendant 30 min puis à 85°C (consigne) sous 1 mbar pendant 3h *pour* conduire à une huile silicone fonctionnalisée composée de n motifs $YCH_3SiO_{2/2}$ , m motifs $HCH_3SiO_{2/2}$ et deux motifs $(CH_3)_3Si_{1/2}$ avec les caractéristiques suivantes : n+m = 9 ; [SiH] = 586 mmol/100g ; [Epoxy] = 291 mmol/100g ; Viscosité = 32 mPa.s.

**Additif C1** est le 3-Glycidyloxypropyl)trimethoxysilane ou **GLYMO**

Tableau 1 : Récapitulatif des additifs d'adhésion avec des motifs époxy

| Additif Adhésion | Nombre total de motifs siloxyles | Nombre motifs $(CH_3)_2SiO_{2/2}$ | [SiH] mmol/ 100g | [Epoxy] mmol/ 100g |
|---|---|---|---|---|
| X1 Invention | 22 | 0 | 1300 | 38 |

(suite)

| Additif Adhésion | Nombre total de motifs siloxyles | Nombre motifs $(CH_3)_2SiO_{2/2}$ | [SiH] mmol/ 100g | [Epoxy] mmol/ 100g |
|---|---|---|---|---|
| X2 Invention | 11 | 0 | 586 | 291 |
| C1 Comparatif | 1 | 0 | 0 | 423 |

2) Essais réalisés

Dans un outil de mélange adapté, de type speed mixer, on introduit sous vide l'ensemble des constituants des formulations décrites dans les tableaux ci-après à l'exception du catalyseur. Après avoir homogénéisé le mélange réactionnel pendant trois minutes on ajoute le catalyseur au platine puis on mélange de nouveau. Les étapes de mélange se font à température ambiante. Une fois que le mélange est homogène on peut procéder à la vulcanisation, c'est-à-dire la réticulation sous effet de la chaleur de la composition silicone pour obtenir un élastomère.

3) Caractérisation

**Vitesse de réticulation** : On prélève trois échantillons de la composition silicone obtenue après mélange de l'ensemble des constituants à différents endroits afin de vérifier l'homogénéité du mélange.
On place environ 5g d'échantillon dans la chambre hermétique chauffée d'un rhéomètre Monsanto MDR 2000E. La chambre hermétique est composée de deux matrices à chauffage direct. On impose la température souhaitée soit 115 ou 170°C. On impose à la chambre inférieure d'osciller à une amplitude de 0,5° d'angle en suivant une fréquence de 100 cycles par minute soit 1.66 Hz à une température de 170 °C. La matrice supérieure enregistre le couple S* de réaction transmis par l'échantillon. Nous obtenons ainsi une courbe de vulcanisation qui décrit la variation du couple S* exprimé en dN.m en fonction du temps à une température donnée. Conformément à la norme ISO 6502 cette variation de couple est corrélée avec le degré de vulcanisation de l'élastomère en fonction du temps selon la norme.
Le rhéomètre enregistre au cours de la mesure la température d'une des matrices, le module élastique S'et le module visqueux S".Ces données nous permettent d'obtenir :

- TC10 (s): le temps que met la réaction à atteindre 10% de la réticulation, dans notre cas il correspond au temps de sécurité (aussi temps de grillage ou de scorch). C'est-à-dire le temps maximum au-delà duquel le produit n'est plus manipulable (transformable)=> risque défauts pièce moulée
- Peak rate (dNm/min) : correspond à la vitesse de réaction maximum lors de la réticulation qui nous permet de comparer les vitesses de réticulation des différentes compositions.

**Propriétés mécaniques** : Une fraction de la masse homogène obtenue est alors vulcanisée, sous pression, pendant 5 minutes à 170°C, en opérant dans un moule approprié permettant d'obtenir des plaques de 2 mm d'épaisseur. On obtient ainsi des plaques à l'état non recuit (NR). On soumet ensuite une fraction des plaques à un recuit de 4h à 200°C (R). On prélève ensuite dans l'ensemble de ces plaques des échantillons normalisés et on mesure les propriétés suivantes :

- dureté Shore A (**DSA**) sur une épaisseur de 6 mm selon la norme DIN 53505,
- résistance à la rupture (**RR**) en MPa selon la norme AFNOR NF T 46002,
- allongement à la rupture (**AR**) en % selon la norme AFNOR NF T 46002,
- module élastique (**Mod 100%**) à 100 % d'allongement en MPa selon la norme AFNOR NF T 46002 et
- résistance au déchirement **Rd** en kN/m selon la norme ASTMD 624A.

**Adhésion**

Les performances d'adhésion des différentes formulations sont déterminées en mesurant la résistance au cisaillement par traction (Rc) selon un protocole dérivant de la norme ISO 4587.
On utilise des éprouvettes en différents matériaux (résines thermoplastiques, acier, aluminium ou verre) de dimensions 100 × 25 mm (L × l). L'épaisseur des éprouvettes varie en fonction du matériau, généralement 3-4 mm pour les résines thermoplastiques. Deux éprouvettes sont collées l'une sur l'autre, la zone de recouvrement étant de 25 × 12 mm avec une épaisseur de composition silicone d'environ 0,5 mm d'épaisseur.
On soumet alors le composite à une cuisson de 170°C pendant 20 min et on fait une première mesure d'adhésion

tel que décrit ci-dessous (résultats NR= Non recuit). Certains composites sont soumis à une recuisson à 100°C pendant une heure (résultats R = recuit).

Pour mesurer l'adhésion on fixe une des deux éprouvettes et on mesure ensuite avec un dynamomètre la force nécessaire pour rompre l'adhésion en tirant sur l'autre éprouvette dans le sens de la longueur. Lors de la traction de l'éprouvette supérieure, un cisaillement se crée au niveau du collage. Ce test permet de déterminer la force nécessaire, suivant un axe, pour « décoller » les deux éprouvettes. On mesure la résistance des liaisons support-matrice ce qui nous permet ainsi de déterminer la cohésion et la résistance à la rupture exprimée en MPa.

On souhaite obtenir une rupture cohésive c'est-à-dire une rupture de l'élastomère silicone et non un simple décollage de l'éprouvette supérieure (rupture adhésive).

Tableau 2 : Formulations testées avec différents promoteurs d'adhésion (parties en poids)

| Essais | Comp.1 | Comp.2 | Ex.1 | Ex.2 | Comp.3 | Comp 4 |
|---|---|---|---|---|---|---|
| Composition Base | 89,9 | 89,9 | 89,9 | 89,5 | 89,9 | 89,9 |
| Huile HVI1 | 3,7 | 3,7 | 3,7 | 3,7 | 3,7 | 3,7 |
| Huile HVI2 | 4,5 | 4,1 | 4,4 | 4,5 | 3,6 | 3,2 |
| Résine SiH | 1,4 | 1,4 | 1,4 | 1,4 | 1,4 | 1,4 |
| Huile SiH | 0 | 0 | 0 | 0 | 0,5 | 0,5 |
| ECH | 0,05 | 0,05 | 0,05 | 0,05 | 0,05 | 0,05 |
| Additif X1 | **0,45** | **0,45** | **0,45** | 0 | 0 | 0 |
| Additif X2 | 0 | 0 | 0 | **0,66** | 0 | 0 |
| Glymo | 0 | 0 | 0 | 0 | **0,9** | **0,9** |
| VTMO | 0 | **0,45** | 0 | 0 | 0 | 0 |
| TBOT | 0 | 0 | **0,18** | **0,18** | 0 | **0,36** |
| Platine ppm | 50 | 50 | 50 | 50 | 50 | 50 |
| Total | 100 | 100 | 100 | 100 | 100 | 100 |
| mmol epoxy/100g formulation | 0,3 | 0,3 | 0,3 | 1,9 | 3,8 | 3,8 |
| ratio molaire SiH/Vi | 2,2 | 1,6 | 2,2 | 1,9 | 2,5 | 2,6 |

Pour l'ensemble des formulations testées le ratio molaire SiH/Vi est compris entre 1,6 et 2,6.

Tableau 3: Caractérisation de l'adhésion de l'élastomère silicone sur polyamide 6 et polyamide 66 (en MPa) et vitesse de réticulation de la composition silicone

| Essai | Comp.1 | Comp.2 | Ex.1 | Ex.2 | Comp.3 | Comp.4 |
|---|---|---|---|---|---|---|
| PA 6 (non recuit) | 0,2 | 0 | 1,4 | 2 | 0 | 0,9 |
| PA 6 (recuit) | 0 | 0 | 2,2 | 2,9 | 0 | 1,1 |
| PA 66 (non recuit) | 0,3 | 0 | 2,2 | 1,9 | 0 | 1,2 |
| PA 66 (recuit) | 0 | 0 | 1,8 | 2,9 | 0 | 1,1 |
| Peak Rate (dNm/min) | 60 | 51 | 58,5 | 53,1 | 63,1 | 65,1 |
| TC 10 (s) | 9,4 | 9,1 | 8,6 | 7,6 | 7,6 | 7,2 |

Les résultats présentés dans le tableau ci-dessus montrent que la présence de résine SiH, des additifs X1 et X2 selon l'invention et de titanate de butyle dans la composition silicone permettent d'obtenir d'excellentes performances d'adhésion de l'élastomère silicone recuit ou non recuit sur le polyamide 6 ou du polyamide 6,6 (exemples 1 et 2). L'ajout

de titanate de butyle permet d'améliorer l'adhésion de l'élastomère silicone sur un support en polyamide 6 ou 66, pour une même concentration en groupes époxy dans la composition silicone (exemple 1 et comparatif 1). L'exemple comparatif 4 nous montre que l'utilisation de 3-Glycidyloxypropyltrimethoxysilane comme additif promoteur d'adhésion à la place des additifs X1 ou X2 conduit à des performances d'adhésion inférieures. Il est souhaitable d'obtenir un élastomère silicone avec une adhésion sur le polyamide 6 ou 6,6 supérieure à 1,2 MPa lorsqu'il est non recuit et supérieure à 1,5 MPa après recuisson.

Tableau 4 : Propriétés mécaniques des élastomères silicones non recuits et recuits

| **Elastomère Non Recuit** | **Comp.1** | **Comp.2** | **Ex.1** | **Ex.2** | **Comp.3** | **Comp.4** |
|---|---|---|---|---|---|---|
| DSA | 47 | 48 | 42 | 46 | 44 | 46 |
| RR (Mpa) | 7,8 | 7,4 | 6,9 | 6,9 | 8,8 | 7,9 |
| AR (%) | 727 | 682 | 722 | 670 | 805 | 771 |
| Rd (N/mm) | 41 | 39 | 37 | 39 | 40 | 39 |
| **Elastomère Recuit** | **Comp.1** | **Comp.2** | **Ex.1** | **Ex.2** | **Comp.3** | **Comp.4** |
| DSA | 50 | 53 | 54 | 50 | 50 | 52 |
| RR (Mpa) | 8,4 | 8,4 | 8,1 | 7,6 | 8,1 | 6,9 |
| AR (%) | 725 | 620 | 620 | 629 | 672 | 570 |
| Rd (N/mm) | 47 | 45 | 45 | 50 | 46 | 45 |

Les propriétés mécaniques des élastomères silicones obtenus sont satisfaisantes.

Optimisation de la composition comprenant l'additif X1

Différentes formulations ont été testées en faisant varier la teneur en additif X1, en résine SiH et en titanate de butyle.

Tableau 5 : Formulations testées

| **Essai** | **Comp. 5** | **Ex.3** | **Ex.4** | **Ex.5** | **Ex.6** |
|---|---|---|---|---|---|
| Composition Base | 89,4 | 89,4 | 89,4 | 89,4 | 89,4 |
| Huile HVI1 | 3,7 | 3,7 | 3,7 | 3,7 | 3,7 |
| Huile HVI2 | 4,5 | 4,5 | 4,5 | 4,5 | 4,5 |
| Résine SiH | 1,4 | 1,4 | 1,1 | 0,7 | 0,5 |
| Additif X1 | 0,9 | 0,80 | 1,08 | 1,45 | 1,78 |
| TBOT | 0 | 0,09 | 0,135 | 0,09 | 0,045 |
| ECH | 0,05 | 0,05 | 0,05 | 0,05 | 0,05 |
| Platine ppm | 50 | 50 | 50 | 50 | 50 |
| Total | 100 | 100,0 | 100 | 100 | 100 |
| mmol epoxy/100g formulation | **0,6** | **0,5** | **0,7** | **1,0** | **1,2** |
| ratio molaire SiH/Vi | 2,9 | 2,7 | 2,9 | 3,1 | 3,4 |

Pour l'ensemble des formulations testées du tableau 5 le ratio molaire SiH/Vi est compris *entre* 2 et 3,4.

Tableau 6: Caractérisation adhésion de l'élastomère silicone sur différents supports (en MPa) et vitesse de réticulation de la composition silicone

| **Essai** | **Comp. 5** | **Ex.3** | **Ex.4** | **Ex.5** | **Ex.6** |
|---|---|---|---|---|---|
| PA6 (NR) | 0,4 | 1,2 | 2,0 | 1,9 | 2,3 |

(suite)

| Essai | Comp. 5 | Ex.3 | Ex.4 | Ex.5 | Ex.6 |
|---|---|---|---|---|---|
| PA6 (R) PA66 (NR) | 0,4 | 1,8 | 1,9 | 1,9 | 2,1 |
| | 0,5 | 1,8 | 1,8 | 2,3 | 1,9 |
| PA66 (R) | 0,8 | 1,7 | 1,9 | 1,6 | 1,8 |
| Alu (NR) | 1,3 | 1,0 | 1,5 | 1,8 | 1,6 |
| Alu (R) | 1,7 | 1,4 | 1,9 | 1,9 | 2,1 |
| Acier (NR) | 1,8 | 1,7 | 1,6 | 2,0 | 2,0 |
| Acier (R) | 1,8 | 2,1 | 2,0 | 1,8 | 2,1 |
| Peak rate (S'/min) | 38,1 | 37,3 | 39,4 | 39,3 | 39,7 |

L'ensemble des compositions selon l'invention (exemples 3 à 6) présentent une bonne cinétique de réticulation et permettent d'obtenir un élastomère avec de bonnes propriétés mécaniques et une bonne adhésion sur les différents supports. On constate qu'en absence de TBOT (comparatif 5) l'adhésion de l'elastomère silicone sur le polyamide 6 ou 6,6 n'est pas satisfaisante.

Tableau 7: Propriétés mécaniques des élastomères silicones non recuits et recuits

| Elastomére Non Recuit | **Comp. 5** | **Ex.3** | **Ex.4** | **Ex.5** | **Ex.6** |
|---|---|---|---|---|---|
| DSA | 44 | 45 | 45 | 44 | 45 |
| RR (Mpa) | 6,2 | 8,0 | 7,7 | 5,9 | 8,1 |
| AR (%) | 590 | 700 | 730 | 580 | 750 |
| Module à 100% (Mpa) | 1,3 | 1,3 | 1,1 | 1,3 | 1,3 |
| Rd (N/mm) | 35 | 39 | 40 | 40 | 41 |
| Elastomère Recuit | **Comp. 5** | **Ex.3** | **Ex.4** | **Ex.5** | **Ex.6** |
| DSA | 53 | 51 | 53 | 53 | 55 |
| RR (Mpa) | 8,0 | 7,3 | 8,3 | 7,0 | 8,2 |
| AR (%) | 620 | 540 | 580 | 510 | 580 |
| Module à 100% (Mpa) | 1,8 | 1,8 | 1,9 | 1,8 | 1,9 |
| Rd (N/mm) | 45 | 51 | 50 | 47 | 47 |

*Optimisation* de la composition comprenant l'additif X2

Différentes formulations ont été testées en faisant varier la teneur en additif X2, en résine SiH et en titanate de butyle.

Tableau 8 : Formulations testées

| Essai | Comp.6 | Ex.7 | Ex.8 | Ex.9 | Ex.10 | ' Comp.7 | Comp.8 |
|---|---|---|---|---|---|---|---|
| Composition Base | 89,1 | 89,1 | 89,1 | 89,1 | 89,1 | 89,1 | 89,1 |
| Huile HVI1 | 3,7 | 3,7 | 3,7 | 3,7 | 3,7 | 3,7 | 3,7 |
| Huile HVI2 | 4,5 | 4,5 | 4,5 | 4,5 | 4,5 | 4,5 | 4,5 |
| Résine SiH | 2 | 1,9 | 1,8 | 1,4 | 0,9 | 0,5 | 0 |
| Additif X2 | 0,66 | 0,66 | 0,66 | 1,13 | 1,61 | 2,03 | 2,46 |
| TBOT | 0 | 0,09 | 0,18 | 0,135 | 0,09 | 0,135 | 0,18 |

(suite)

| Essai | Comp.6 | Ex.7 | Ex.8 | Ex.9 | Ex.10 | ' Comp.7 | Comp.8 |
|---|---|---|---|---|---|---|---|
| ECH | 0,05 | 0,05 | 0,05 | 0,05 | 0,05 | 0,05 | 0,05 |
| Platine ppm | 50 | 50 | 50 | 50 | 50 | 50 | 50 |
| Total | 100 | 100 | 100 | 100 | 100 | 100 | 100 |
| mmol epoxy/100g formulation | **1,9** | **1,9** | **1,9** | **3,2** | **4,6** | **5,8** | **7,05** |
| ratio molaire SiH/Vi | 2,5 | 2,5 | 2,4 | 2,3 | 2,2 | 2,0 | 1,8 |

Pour l'ensemble des formulations testées le ratio molaire SiH/Vi est *compris* entre 1,8 et 3,4.

Tableau 9: Caractérisation adhésion sur différents supports (en MPa) et vitesse de réticulation

| Essai | Comp.6 | Ex.7 | Ex.8 | Ex.9 | Ex.10 | Comp.7 | Comp.8 |
|---|---|---|---|---|---|---|---|
| PA6 (NR) | 0,7 | 1,8 | 2,7 | 1,8 | 2,2 | 0,8 | 0,3 |
| PA6 (R) | 1,5 | 1,9 | 2,4 | 1,8 | 2,1 | 1,2 | 0,4 |
| PA66 (NR) | 1,3 | 1,9 | 2,7 | 2,4 | 2,2 | 0,8 | 0,4 |
| PA66 (R) | 1,3 | 2,2 | 2,4 | 2,7 | 2,5 | 1,0 | 0,5 |
| Alu (NR) | 0,7 | 0,9 | 1,0 | 1,3 | 1,5 | 1,7 | 1 |
| Alu (R) | 0,5 | 1,1 | 1,3 | 1,9 | 2,1 | 2,1 | 1,1 |
| Acier (NR) | 1,7 | 1,3 | 1,5 | 2,0 | 2,2 | 2,0 | 0,3 |
| Acier (R) | 1,9 | 1,6 | 1,7 | 2,5 | 2,9 | 0,9 | 1,2 |
| Peak rate (S'/min) | 35,7 | 37,4 | 40 | 40,5 | 38,7 | 24,9 | 13,3 |

L'exemple comparatif 6 montre que lorsque la composition ne comprend pas de titanate de butyle, l'adhésion sur le polyamide 6 ou 6,6 et sur l'aluminium est plus faible.

L'exemple comparatif 7 montre que la vitesse de réticulation de la composition silicone et l'adhésion entre l'élastomère silicone et le polyamide 6 ou 66 diminue de façon importante lorsque le taux d'époxy est égal à 5,8 mmol d'époxy par 100 g de composition silicone. La valeur de Peak rate est inférieure à 30 ce qui est trop faible pour l'application souhaitée.

Tableau 10: Propriétés mécaniques des élastomères non recuits et recuits

| Elastomère Non Recuit | Comp.6 | Ex.7 | Ex.8 | Ex.9 | Ex.10 | Comp.7 | Comp.8 |
|---|---|---|---|---|---|---|---|
| DSA | 45 | 47 | 48 | 49 | 48 | 42 | 42 |
| RR (Mpa) | 6,9 | 7,8 | 6,4 | 7,8 | 7,4 | 6,8 | 7,0 |
| AR (%) | 680 | 710 | 580 | 600 | 650 | 690 | 750 |
| Module à 100% (Mpa) | 1,4 | 1,3 | 2,0 | 1,4 | 1,5 | 1,2 | 1,1 |
| Rd (N/mm) | 37 | 38 | 38 | 37 | 38 | 37 | 37 |
| Elastomère Recuit | **Comp.6** | **Ex.7** | **Ex.8** | **Ex.9** | **Ex.10** | **Comp.7** | **Comp.8** |
| DSA | 55 | 54 | 54 | 55 | 54 | 51 | 50 |
| RR (Mpa) | 7,4 | 8,3 | 7,5 | 7,7 | 8,5 | 7,4 | 8,1 |
| AR (%) | 520 | 600 | 530 | 580 | 620 | 640 | 690 |
| Module à 100% (Mpa) | 2 | 1,9 | 2,0 | 1,9 | 1,9 | 1,5 | 1,4 |
| Rd (N/mm) | 42 | 43 | 44 | 42 | 41 | 41 | 42 |

## Revendications

**1.** Procédé de préparation d'un article composite **AC** comprenant les étapes suivantes :

a) on applique sur un substrat rigide **S** en métal, verre ou résine thermoplastique une composition silicone **C**, réticulant par polyaddition en un élastomère silicone **E**, comprenant :

(A) au moins un organopolysiloxane **A** comprenant par molécule au moins deux groupes alcényles, en $C_2$-$C_6$, liés à deux atomes de silicium différents,
(B) au moins une résine organohydrogénopolysiloxane **B**,
(C) au moins un additif X qui est un organopolysiloxane linéaire comprenant des motifs siloxyles **(I.1)** à **(I.3)** de formules suivantes:

-

$$Y_a Z^1_b SiO_{\frac{4-(a+b)}{2}} \qquad \textbf{(I.1)}$$

-

$$Z^2_3 SiO_{\frac{1}{2}} \qquad \textbf{(I.2)}$$

-

$$H_d Z^3_e SiO_{\frac{4-(d+e)}{2}} \qquad \textbf{(I.3)}$$

et ne comprenant pas de motifs de formule **(I.4)**:

-

$$Z^2_2 SiO_{\frac{2}{2}} \qquad \textbf{(I.4)}$$

dans lesquelles

- a=1 et b=1 ou 2
- d=1 et e=1 ou 2
- le symbole Y représente un radical comprenant un groupe hydrocarboné ayant de 2 à 20 atomes de carbone et une fonction époxy, avec éventuellement un ou plusieurs hétéroatomes tel qu'un atome d'oxygène, de préférence le symbole Y est choisi parmi les radicaux constitués par le groupe : alkylglycidyléther, époxyalkyle linéaire, ramifié ou cyclique, époxyalcényle linéaire, ramifié ou cyclique et glycidyl-ester d'acide carboxylique,
- les symboles $Z^1$, $Z^2$ et $Z^3$ identiques ou différents, représentent, un groupe hydrocarboné monovalent ayant de 1 à 30 atomes de carbone, de préférence choisi parmi le groupe constitué par les groupes alkyles ayant de 1 à 8 atomes de carbone et les groupes aryles ayant de 6 à 12 atomes de carbone, et encore plus préférentiellement choisis parmi le groupe constitué par un groupe méthyle, éthyle et propyle,

avec les conditions suivantes :

- l'additif **X** comprend, par molécule, au moins un motif siloxyle **(I.1)** porteur de groupes hydrocarbonés époxyfonctionnels, au moins trois motifs siloxyles **(I.3)** porteurs de groupes hydrogénosiloxyles et un nombre total de motifs siloxyles **N** compris entre 7 et 30,

(D) au moins *une* charge renforçante **D**,
(E) au moins un composé organique du titane **M**,
(F) au moins un catalyseur **F** de polyaddition, de préférence un composé d'au moins un métal appartenant au groupe du platine, et
(G) éventuellement un inhibiteur **G**, et
les quantités des différents constituants de ladite composition **C** sont telles que le rapport molaire [≡SiH] /[ ≡SiAlcényle] est compris entre 1,5 et 3,6 avec

- [≡SiH]= nombre total de mole de motifs siloxyles comprenant un atome d'hydrogène lié au silicium, et
- [≡SiAlcényle] = nombre total de mole de motifs siloxyles comprenant un radical alcényle lié au silicium, et

b) on réticule ladite composition silicone **C** par chauffage à une température comprise entre 40 et 250 °C, de préférence entre 100 et 220°C, pour obtenir un article composite **AC** comprenant ledit élastomère silicone **E** appliqué sur ledit substrat rigide **S**.

**2.** Procédé selon la revendication 1 dans lequel la concentration en fonction époxy dans la composition silicone **C** est comprise entre 0,20 et 5 mmol par 100 g de composition **C**.

**3.** Procédé selon la revendication 1 dans lequel la teneur en composé organique du titane **M** dans la composition silicone **C** est comprise entre 0,005 et 0,35 parties en poids pour 100 parties en poids de la composition **C**.

**4.** Procédé selon la revendication 1 dans lequel la charge renforçante **D** est une silice pyrogénée ayant une surface spécifique mesurée selon la méthode BET comprise entre 100 et 400 $m^2/g$.

**5.** Procédé de surmoulage selon la revendication 1 dans lequel les étapes a) et b) ont lieu dans un appareil de moulage par injection.

**6.** Procédé selon la revendication 1 dans lequel le substrat rigide **S** est une pièce moulée en résine thermoplastique.

**7.** Article composite **AC** comprenant un substrat rigide **S** en verre, métal ou résine thermoplastique et un élastomère silicone **E** obtenu par réticulation d'une composition silicone **C** telle que définie dans les revendications 1 à 4.

**8.** Article composite **AC** selon la revendication 7 dans lequel le substrat **S** est en résine thermoplastique et a été obtenu par moulage.

**9.** Article composite **AC** intégralement moulé selon la revendication 8 réalisé avec un ou plusieurs appareils de moulage par injection.

**10.** Composition silicone **C** réticulant par polyaddition comprenant :

(A) au moins un organopolysiloxane **A** comprenant par molécule moins deux groupes alcényles, en $C_2$-$C_6$, liés à deux atomes de silicium différents,
(B) au moins une résine organohydrogénopolysiloxane **B**
(C) au moins un additif **X** qui est un organopolysiloxane linéaire comprenant des motifs siloxyles **(I.1)** à **(I.3)** de formules suivantes:

-

$$Y_a Z^1_b SiO_{\frac{4-(a+b)}{2}} \quad \textbf{(I.1)}$$

-

$$Z^2_3SiO_{\frac{1}{2}} \quad \textbf{(I.2)}$$

-

$$H_dZ^3_eSiO_{\frac{4-(d+e)}{2}} \quad \textbf{(I.3)}$$

et ne comprenant pas de motifs de formule **(I.4)**:

-

$$Z^2_2SiO_{\frac{2}{2}} \quad \textbf{(I.4)}$$

dans lesquelles

- a=1 et b=1 ou 2
- d=1 et e=1 ou 2
- le symbole Y représente un radical comprenant un groupe hydrocarboné ayant de 2 à 20 atomes de carbone et une fonction époxy, avec éventuellement un ou plusieurs hétéroatomes tel qu'un atome d'oxygène, de préférence le symbole Y est choisi parmi les radicaux constitués par le groupe : alkylglycidyléther, époxyalkyle linéaire, ramifié ou cyclique, époxyalcényle linéaire, ramifié ou cyclique et glycidyl-ester d'acide carboxylique,
- les symboles $Z^1$, $Z^2$ et $Z^3$ identiques ou différents, représentent, un groupe hydrocarboné monovalent ayant de 1 à 30 atomes de carbone, de préférence choisi parmi le groupe constitué par les groupes alkyles ayant de 1 à 8 atomes de carbone et les groupes aryles ayant de 6 à 12 atomes de carbone, et encore plus préférentiellement choisis parmi le groupe constitué par un groupe méthyle, éthyle et propyle,

avec les conditions suivantes :

- l'additif **X** comprend, par molécule, au moins un motif siloxyle **(I.1)** porteur de groupes hydrocarbonés époxyfonctionnels, au moins trois motifs siloxyles **(I.3)** porteurs de groupes hydrogénosiloxyles et un nombre total de motifs siloxyles **N** compris entre 7 et 30,

(D) au moins une charge renforçante **D**,
(E) au moins un composé organique du titane **M**,
(F) au moins un catalyseur **F** de polyaddition, de préférence un composé d'au moins un métal appartenant au groupe du platine, et
(G) éventuellement un inhibiteur **G**, et
les quantités des différents constituants de ladite composition **C** sont telles que le rapport molaire [≡SiH] /[ ≡SiAlcényle] est compris entre 1,5 et 3,6 avec

- [≡SiH]= nombre total de mole de motifs siloxyles comprenant un atome d'hydrogène lié au silicium, et
- [≡SiAlcényle] = nombre total de mole de motifs siloxyles comprenant un radical alcényle lié au silicium.

**11.** Composition silicone **C** selon la revendication 10 comprenant pour 100 parties en poids de composition **C** :

- de 0,1 à 2,5 de parties en poids de résine organohydrogénopolysiloxane **B**
- de 0,4 à 2 parties en poids d'additif **X** et
- de 0,005 à 0,35 parties en poids de composé organique **M** de titane.

**12.** Composition silicone **C** selon la revendication 10 comprenant pour 100 parties en poids de composition **C** :

- de 55 à 80 parties en poids d'organopolysiloxane **A**
- de 0,3 à 2,2 de parties en poids de résine organohydrogénopolysiloxane **B**
- de 0,4 à 2 parties en poids d'additif **X** et
- de 0,03 à 0,25 parties en poids d'un composé organique **M** de titane
- de 20 à 40 parties en poids de charge renforçante **D**
- de 0,002 à 0,01 parties en poids de Platine et
- de 0 à 0,1 parties en poids d'inhibiteur **G**.

**13.** Système bicomposant précurseur de la composition **C** telle que définie selon la revendication 10 se présentant en deux parties **C1** et **C2** distinctes destinées à être mélangées pour former la composition **C**, **caractérisé en ce que** l'une de ces parties contient le catalyseur **F** tandis que l'autre partie contient la résine **B** et l'additif **X**.

**14.** Elastomère silicone **E** obtenu par réticulation de la composition silicone C telle que définie selon l'une quelconques des revendications 10 à 12.

**15.** Utilisation d'une composition **C** telle que définie selon les revendications 10 à 12 dans un moulage par coulage, dans un moulage par transfert, dans un moulage par injection, dans un moulage par extrusion ou dans un moulage par compression.

## Patentansprüche

**1.** Verfahren zur Herstellung eines Verbundgegenstands **CA**, das folgende Schritte umfasst:

a) man bringt auf ein starres Substrat **S** aus Metall, Glas oder thermoplastischem Harz eine durch Polyaddition zu einem Silikonelastomer **E** vernetzende Silikonzusammensetzung **C** auf, die Folgendes umfasst:

(A) mindestens ein Organopolysiloxan **A**, das pro Molekül mindestens zwei $C_2$-$C_6$-Alkenylgruppen, die an zwei verschiedene Siliciumatome gebunden sind, umfasst,
(B) mindestens ein Organohydrogenopolysiloxanharz **B**,
(C) mindestens ein Additiv **X**, bei dem es sich um ein lineares Organopolysiloxan handelt, das Siloxyleinheiten **(1.1)** bis **(1.3)** mit den folgenden Formeln:

-

$$Y_aZ^1_bSiO_{\frac{4-(a+b)}{2}} \quad (I.1)$$

-

$$Z^2_3SiO_{\frac{1}{2}} \quad (I.2)$$

-

$$H_dZ^3_eSiO_{\frac{4-(d+e)}{2}} \quad (I.3)$$

umfasst und keine Einheiten der Formel **(I.4)**:

-

$$Z^2_2SiO_{\frac{2}{2}} \quad (I.4)$$

umfasst, wobei:

- a=1 und b=1 oder 2,
- d=1 und e=1 oder 2,
- das Symbol Y für einen Rest mit einer Kohlenwasserstoffgruppe mit 2 bis 20 Kohlenstoffatomen und einer Epoxidfunktion und gegebenenfalls einem oder mehreren Heteroatomen wie einem Sauerstoffatom steht, vorzugsweise das Symbol Y aus den Resten bestehend aus der Gruppe Alkylglycidylether, lineares, verzweigtes oder cyclisches Epoxyalkyl, lineares, verzweigtes oder cyclisches Epoxyalkenyl und Carbonsäureglycidylester ausgewählt ist,
- die Symbole $Z^1$, $Z^2$ und $Z^3$ gleich oder verschieden sind und für eine einwertige Kohlenwasserstoffgruppe mit 1 bis 30 Kohlenstoffatomen stehen und vorzugsweise aus der Gruppe bestehend aus Alkylgruppen mit 1 bis 8 Kohlenstoffatomen und Arylgruppen mit 6 bis 12 Kohlenstoffatomen ausgewählt sind und noch weiter bevorzugt aus der Gruppe bestehend aus einer Methyl-, Ethyl- und Propylgruppe ausgewählt sind,

mit den folgenden Maßgaben:

- das Additiv **X** umfasst pro Molekül mindestens eine Siloxyleinheit **(I.1)** mit epoxidfunktionellen Kohlenwasserstoffgruppen, mindestens drei Siloxyleinheiten **(I.3)** mit Hydrogensiloxylgruppen und eine Gesamtzahl von Siloxyleinheiten **N** zwischen 7 und 30,

(D) mindestens einen verstärkenden Füllstoff **D**,
(E) mindestens eine Organotitanverbindung **M**,
(F) mindestens einen Polyadditionskatalysator **F**, vorzugsweise eine Verbindung mindestens eines Metalls der Platingruppe, und
(G) gegebenenfalls einen Inhibitor **G**, und
wobei die Mengen der verschiedenen Bestandteile der Zusammensetzung **C** so beschaffen sind, dass das [≡SiH] / [=SiAlkenyl]-Molverhältnis zwischen 1,5 und 3,6 liegt, wobei

- [≡SiH] = Gesamtzahl von Molen von Siloxyleinheiten mit einem siliciumgebundenen Wasserstoffatom und
- [≡SiAlkenyl] = Gesamtzahl von Molen von Siloxyleinheiten mit einem siliciumgebundenen Alkinylrest, und

b) man vernetzt die Silikonzusammensetzung **C** durch Erhitzen auf eine Temperatur zwischen 40 und 250 °C, vorzugsweise zwischen 100 und 220 °C, unter Erhalt eines Verbundgegenstands **CA**, der ein auf das starre Substrat **S** aufgebrachtes Silikonelastomer **E** umfasst.

**2.** Verfahren nach Anspruch 1, wobei die Konzentration von Epoxidfunktionen in der Silikonzusammensetzung **C** zwischen 0,20 und 5 mmol pro 100 g Zusammensetzung **C** liegt.

**3.** Verfahren nach Anspruch 1, wobei der Gehalt an Organotitanverbindung **M** in der Silikonzusammensetzung **C** zwischen 0,005 und 0,35 Gewichtsteilen pro 100 Gewichtsteile der Zusammensetzung **C** liegt.

**4.** Verfahren nach Anspruch 1, wobei es sich bei dem verstärkenden Füllstoff **D** um eine pyrogene Kieselsäure mit einer nach der BET-Methode gemessenen spezifischen Oberfläche zwischen 100 und 400 $m^2/g$ handelt.

**5.** Überspritzverfahren nach Anspruch 1, wobei die Schritte a) und b) in einer Spritzgussmaschine erfolgen.

**6.** Verfahren nach Anspruch 1, wobei es sich bei dem starren Substrat **S** um ein Formteil aus thermoplastischem Harz handelt.

**7.** Verbundgegenstand **CA**, umfassend ein starres Substrat **S** aus Glas, Metall oder thermoplastischem Harz und ein durch Vernetzen einer Silikonzusammensetzung **C** gemäß einem der Ansprüche 1 bis 4 erhaltenes Silikonelastomer **E**.

**8.** Verbundgegenstand **CA** nach Anspruch 7, wobei das Substrat **S** aus thermoplastischem Harz besteht und durch Formgebung erhalten wurde.

**9.** Einstückig geformter Verbundgegenstand **CA** nach Anspruch 8, hergestellt mit einer oder mehreren Spritzgussmaschinen.

**10.** Durch Polyaddition vernetzende Silikonzusammensetzung **C**, umfassend:

(A) mindestens ein Organopolysiloxan **A**, das pro Molekül mindestens zwei $C_2$-$C_6$-Alkenylgruppen, die an zwei verschiedene Siliciumatome gebunden sind, umfasst,
(B) mindestens ein Organohydrogenopolysiloxanharz **B,**
(C) mindestens ein Additiv **X**, bei dem es sich um ein lineares Organopolysiloxan handelt, das Siloxyleinheiten **(1.1)** bis **(1.3)** mit den folgenden Formeln:

-

$$Y_a Z^1_b SiO_{\frac{4-(a+b)}{2}} \qquad \textbf{(I.1)}$$

-

$$Z^2_3 SiO_{\frac{1}{2}} \qquad \textbf{(I.2)}$$

-

$$H_d Z^3_e SiO_{\frac{4-(d+e)}{2}} \qquad \textbf{(I.3)}$$

umfasst und keine Einheiten der Formel **(I.4)**:

-

$$Z^2_2 SiO_{\frac{2}{2}} \qquad \textbf{(I.4)}$$

umfasst, wobei:

- a=1 und b=1 oder 2,
- d=1 und e=1 oder 2,
- das Symbol Y für einen Rest mit einer Kohlenwasserstoffgruppe mit 2 bis 20 Kohlenstoffatomen und einer Epoxidfunktion und gegebenenfalls einem oder mehreren Heteroatomen wie einem Sauerstoffatom steht, vorzugsweise das Symbol Y aus den Resten bestehend aus der Gruppe Alkylglycidylether, lineares, verzweigtes oder cyclisches Epoxyalkyl, lineares, verzweigtes oder cyclisches Epoxyalkenyl und Carbonsäureglycidylester ausgewählt ist,
- die Symbole $Z^1$, $Z^2$ und $Z^3$ gleich oder verschieden sind und für eine einwertige Kohlenwasserstoffgruppe mit 1 bis 30 Kohlenstoffatomen stehen und vorzugsweise aus der Gruppe bestehend aus Alkylgruppen mit 1 bis 8 Kohlenstoffatomen und Arylgruppe mit 6 bis 12 Kohlenstoffatomen ausgewählt sind und noch weiter bevorzugt aus der Gruppe bestehend aus einer Methyl-, Ethyl- und Propylgruppe ausgewählt sind,

mit den folgenden Maßgaben:

- das Additiv **X** umfasst pro Molekül mindestens eine Siloxyleinheit **(I.1)** mit epoxidfunktionellen Kohlenwasserstoffgruppen, mindestens drei Siloxyleinheiten **(I.3)** mit Hydrogensiloxylgruppen und eine Gesamtzahl von Siloxyleinheiten **N** zwischen 7 und 30,

(D) mindestens einen verstärkenden Füllstoff **D**,

(E) mindestens eine Organotitanverbindung **M**,
(F) mindestens einen Polyadditionskatalysator **F**, vorzugsweise eine Verbindung mindestens eines Metalls der Platingruppe, und
(G) gegebenenfalls einen Inhibitor **G**, und
wobei die Mengen der verschiedenen Bestandteile der Zusammensetzung **C** so beschaffen sind, dass das [≡SiH] / [≡SiAlkenyl]-Molverhältnis zwischen 1,5 und 3,6 liegt, wobei

- [≡SiH] = Gesamtzahl von Molen von Siloxyleinheiten mit einem siliciumgebundenen Wasserstoffatom und
- [≡SiAlkenyl] = Gesamtzahl von Molen von Siloxyleinheiten mit einem siliciumgebundenen Alkinylrest.

**11.** Silikonzusammensetzung **C** nach Anspruch 10, umfassend pro 100 Gewichtsteile von Zusammensetzung **C**:

- 0,1 bis 2,5 Gewichtsteile Organohydrogenopolysiloxanharz **B**,
- 0,4 bis 2 Gewichtsteile Additiv **X** und
- 0,005 bis 0,35 Gewichtsteile Organotitanverbindung **M**.

**12.** Silikonzusammensetzung **C** nach Anspruch 10, umfassend pro 100 Gewichtsteile von Zusammensetzung **C**:

- 55 bis 80 Gewichtsteile Organopolysiloxan **A**,
- 0,3 bis 2,2 Gewichtsteile Organohydrogenopolysiloxanharz **B**,
- 0,4 bis 2 Gewichtsteile Additiv **X** und
- 0,03 bis 0,25 Gewichtsteile Organotitanverbindung **M**
- 20 bis 40 Gewichtsteile verstärkenden Füllstoff **D**,
- 0,002 bis 0,01 Gewichtsteile Platin und
- 0 bis 0,1 Gewichtsteile Inhibitor **G**.

**13.** Zweikomponentiges Vorläufersystem für die Zusammensetzung **C** gemäß Anspruch 10, das in zwei separaten Teilen **C1** und **C2**, die zum Mischen zur Bildung der Zusammensetzung **C** vorgesehen sind, vorliegt, **dadurch gekennzeichnet, dass** einer dieser Teile den Katalysator **F** enthält, während der andere Teil das Harz **B** und das Additiv **X** enthält.

**14.** Silikonelastomer **E**, erhalten durch Vernetzung der Silikonzusammensetzung **C** gemäß einem der Ansprüche 10 bis 12.

**15.** Verwendung einer Zusammensetzung **C** gemäß den Ansprüchen 10 bis 12 beim Gießformen, beim Spritzpressen, beim Spritzgießen, beim Extrusionsformen oder beim Formpressen.

## Claims

**1.** Process for preparing a composite article **CA** comprising the following steps:

a) a polyaddition-crosslinking silicone composition **C** made of a silicone elastomer **E** is applied to a rigid metal, glass or thermoplastic resin substrate **S**, said composition comprising:

(A) at least one organopolysiloxane **A** comprising per molecule at least two $C_2$-$C_6$ alkenyl groups, bonded to two different silicon atoms,
(B) at least one organohydrogenopolysiloxane resin **B**,
(C) at least one additive **X** which is a linear organopolysiloxane comprising siloxyl units **(1.1)** to **(1.3)** having the following formulae:

-

$$Y_a Z^1_b SiO_{\frac{4-(a+b)}{2}} \qquad \textbf{(I.1)}$$

-

$$Z^2_3SiO_{\frac{1}{2}} \quad \textbf{(I.2)}$$

-

$$H_dZ^3_eSiO_{\frac{4-(d+e)}{2}} \quad \textbf{(I.3)}$$

and not comprising any units of formula **(I.4):**

-

$$Z^2_2SiO_{\frac{2}{2}} \quad \textbf{(I.4)}$$

in which:

- a=1 and b=1 or 2
- d=1 and e=1 or 2
- the symbol Y represents a radical comprising a hydrocarbon-based group containing from 2 to 20 carbon atoms and an epoxy function, optionally with one or more heteroatoms such as an oxygen atom; preferably, the symbol Y is chosen from radicals constituted by the group: alkyl glycidyl ether, linear, branched or cyclic epoxyalkyl, linear, branched or cyclic epoxyalkenyl and carboxylic acid glycidyl ester,
- the symbols $Z^1$, $Z^2$ and $Z^3$, which may be identical or different, represent a monovalent hydrocarbon-based group containing from 1 to 30 carbon atoms, preferably chosen from the group constituted by alkyl groups containing from 1 to 8 carbon atoms and aryl groups containing from 6 to 12 carbon atoms, and even more preferentially chosen from the group constituted by a methyl, ethyl and propyl group,

with the following conditions:

- the additive **X** comprises, per molecule, at least one siloxyl unit **(I.1)** bearing epoxy-functional hydrocarbon-based groups, at least three siloxyl units **(I.3)** bearing hydrogenosiloxyl groups and a total number of siloxyl units **N** of between 7 and 30,

(D) at least one reinforcing filler **D,**
(E) at least one organotitanium compound **M**,
(F) at least one polyaddition catalyst **F**, preferably a compound of at least one metal belonging to the platinum group, and
(G) optionally an inhibitor **G**, and
the amounts of the various constituents of said composition **C** are such that the [≡SiH]/[≡SiAlkenyl] mole ratio is between 1.5 and 3.6 with

- [≡SiH] = total number of moles of siloxyl units comprising a hydrogen atom bonded to silicon, and
- [≡SiAlkenyl] = total number of moles of siloxyl units comprising an alkenyl radical bonded to silicon, and

b) said silicone composition **C** is crosslinked by heating to a temperature of between 40 and 250°C, preferably between 100 and 220°C, to obtain a composite article **CA** comprising a silicone elastomer **E** with good adhesion to said rigid substrate **S**.

**2.** Process according to Claim 1, in which the concentration of epoxy functions in the silicone composition **C** is between 0.20 and 5 mmol per 100 g of composition **C**.

**3.** Process according to Claim 1, in which the content of organotitanium compound **M** in the silicone composition **C** is between 0.005 and 0.35 part by weight per 100 parts by weight of the composition **C**.

**4.** Process according to Claim 1, in which the reinforcing filler **D** is a fumed silica with a specific surface area measured according to the BET method of between 100 and 400 $m^2/g$.

**5.** Overmoulding process according to Claim 1, in which steps a) and b) take place in an injection moulding machine.

**6.** Process according to Claim 1, in which the rigid substrate **S** is a moulded thermoplastic resin part.

**7.** Composite article **CA** comprising a rigid glass, metal or thermoplastic resin substrate **S** and a silicone elastomer **E** obtained by crosslinking a silicone composition **C** as defined in Claims 1 to 4.

**8.** Composite article **CA** according to Claim 7, in which the substrate **S** is made of thermoplastic resin and has been obtained by moulding.

**9.** Integrally moulded composite article **CA** according to Claim 8, made with one or more injection moulding machines.

**10.** Polyaddition-crosslinking silicone composition **C** comprising:

(A) at least one organopolysiloxane **A** comprising per molecule at least two $C_2$-$C_6$ alkenyl groups, bonded to two different silicon atoms,
(B) at least one organohydrogenopolysiloxane resin **B**
(C) at least one additive **X** which is a linear organopolysiloxane comprising siloxyl units **(I.1)** to **(I.3)** having the following formulae:

-

$$Y_a Z^1_b SiO_{\frac{4-(a+b)}{2}} \quad \textbf{(I.1)}$$

-

$$Z^2_3 SiO_{\frac{1}{2}} \quad \textbf{(I.2)}$$

-

$$H_d Z^3_e SiO_{\frac{4-(d+e)}{2}} \quad \textbf{(I.3)}$$

and not comprising any units of formula **(I.4)**:

-

$$Z^2_2 SiO_{\frac{2}{2}} \quad \textbf{(I.4)}$$

in which:

- a=1 and b=1 or 2
- d=1 and e=1 or 2
- the symbol Y represents a radical comprising a hydrocarbon-based group containing from 2 to 20 carbon atoms and an epoxy function, optionally with one or more heteroatoms such as an oxygen atom; preferably, the symbol Y is chosen from radicals constituted by the group: alkyl glycidyl ether, linear, branched or cyclic epoxyalkyl, linear, branched or cyclic epoxyalkenyl and carboxylic acid glycidyl ester,
- the symbols $Z^1$, $Z^2$ and $Z^3$, which may be identical or different, represent a monovalent hydrocarbon-based group containing from 1 to 30 carbon atoms, preferably chosen from the group constituted by alkyl groups containing from 1 to 8 carbon atoms and aryl groups containing from 6 to 12 carbon atoms, and even more preferentially chosen from the group constituted by a methyl, ethyl and propyl group,

with the following conditions:

- the additive **X** comprises, per molecule, at least one siloxyl unit **(I.1)** bearing epoxy-functional hydrocarbon-based groups, at least three siloxyl units **(I.3)** bearing hydrogenosiloxyl groups and a total number of siloxyl units **N** of between 7 and 30,

(D) at least one reinforcing filler **D**,
(E) at least one organotitanium compound **M**,
(F) at least one polyaddition catalyst **F**, preferably a compound of at least one metal belonging to the platinum group, and
(G) optionally an inhibitor **G**, and
the amounts of the various constituents of said composition **C** are such that the [≡SiH]/[≡SiAlkenyl] mole ratio is between 1.5 and 3.6 with

- [≡SiH] = total number of moles of siloxyl units comprising a hydrogen atom bonded to silicon, and
- [≡SiAlkenyl] = total number of moles of siloxyl units comprising an alkenyl radical bonded to silicon.

**11.** Silicone composition **C** according to Claim 10, comprising per 100 parts by weight of composition **C**:

- from 0.1 to 2.5 parts by weight of organohydrogenopolysiloxane resin **B**
- from 0.4 to 2 parts by weight of additive **X** and
- from 0.005 to 0.35 part by weight of organotitanium compound **M**.

**12.** Silicone composition **C** according to Claim 10, comprising per 100 parts by weight of composition **C**:

- from 55 to 80 parts by weight of organopolysiloxane **A**
- from 0.3 to 2.2 parts by weight of organohydrogenopolysiloxane resin **B**
- from 0.4 to 2 parts by weight of additive **X** and
- from 0.03 to 0.25 part by weight of organotitanium compound **M**
- from 20 to 40 parts by weight of reinforcing filler **D**
- from 0.002 to 0.01 part by weight of platinum and
- from 0 to 0.1 part by weight of inhibitor **G**.

**13.** Two-component system which is a precursor of the composition C as defined according to Claim 10, which is in two separate parts **C1** and **C2** intended to be mixed to form the composition **C**, **characterized in that** one of these parts contains the catalyst **F** whereas the other part contains the resin **B** and the additive **X**.

**14.** Silicone elastomer E obtained by crosslinking the silicone composition **C** as defined according to any one of Claims 10 to 12.

**15.** Use of a composition C as defined according to Claims 10 to 12, in cast moulding, in transfer moulding, in injection moulding, in extrusion moulding or in compression moulding.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 0601881 A
- EP 0875536 A
- EP 1106662 A
- EP 1967551 A
- WO 2008000771 A1
- FR 2957604 A1
- WO 2008055985 A1
- FR 2840826 A1
- US 3159601 A
- US 3159602 A
- US 3220972 A
- EP 0057459 A
- EP 0188978 A
- EP 0190530 A
- US 3419593 A
- US 3715334 A
- US 3377432 A
- US 3814730 A
- FR 1528464 B
- FR 2372874 A